# EUROPÄISCHE PATENTSCHRIFT

(11) **EP 1 673 972 B1**
(45) Veröffentlichungstag und Bekanntmachung des Hinweises auf die Patenterteilung: **18.04.2007**
(21) Anmeldenummer: 05027817.5
(22) Anmeldetag: 19.12.2005
(51) Int. Cl.: A01K 1/015

(54) **Betonfertigteilesystem für einen Stallboden, ein diesen Stallboden umfassender Stall und Verfahren zu seiner Herstellung**
Prefabricated concrete elements system for a stable floor, stable floor comprising said elements and method for manufacturing the same
Système d'éléments préfabriqués en béton pour un sol d'étable, sol d'étable comprenant lesdits éléments et procédé pour sa fabrication

(30) Priorität: 21.12.2004 DE 102004061547
(43) Veröffentlichungstag der Anmeldung: 28.06.2006
(73) Patentinhaber: Hartmann Grundbesitz GmbH & Co. KG, 92265 Edelsfeld (DE)
(72) Erfinder: Hartmann, Hans, 92265 Edelsfeld (DE)
(74) Vertreter: Böhm, Thomas

(56) Entgegenhaltungen:
- WO-A-20/04064505
- DE-A1- 4 312 128
- DE-U1- 20 111 208
- NL-C1- 1 015 290
- NL-C2- 1 013 163

## Beschreibung

Die vorliegende Erfindung betrifft ein Betonfertigteilesystem für einen Stallboden, einen ein solches Betonfertigteilesystem umfassenden Stallboden, einen Stall, der einen solchen Stallboden umfasst, sowie ein Verfahren zur Herstellung eines solchen Stalls.

Es ist bekannt, die Liegeboxen mit Liegemulden in einem Stall für Tiere, insbesondere Rinder, als Fertigbetonteile herzustellen. Damit kann ein Stall vorteilhaft schnell gebaut werden. Dies ist zum Beispiel aus der Offenlegungsschrift DE 101 09 811 A1 von Hartmann bekannt. Der Laufgang eines solchen Stalls wird aus Beton gegossen. Zuvor wurden Laufgänge auch aus Gussasphalt hergestellt, doch ist dieser nicht so lange haltbar wie ein Betonboden und kostenintensiver. Der Einsatz eines Laufgangs, der aus vergossenem Beton hergestellt, also betoniert wird, hat den Vorteil, dass er undurchlässig ist für Flüssigkeiten, insbesondere den Harn und die Fäkalien, die von den Tieren abgeschieden werden. Außerdem ist eine solche gegossene Betonplatte stabil, um von einem Fahrzeug befahren werden zu können. Ferner können die Liegemuldenplatten ohne Probleme auf dem betonierten Laufgang aufliegen. Somit gibt es wegen dieser Überlappung im Wesentlichen keine Dichtigkeitsprobleme zwischen Liegemuldenplatten und Laufgang. Eine Verbindung von Laufgang und Liegmuldenplatten ist nicht notwendig. Der Laufgang eines Stalls wird regelmäßig mit einem Fahrzeug befahren, z.B. einem Einstreuwagen. Andererseits besitzt das Betonieren des Laufgangs den Nachteil, dass dieser Vorgang gegenüber einem Verlegen von Fertigbetonteilen länger dauert und aufwändiger ist mit mehr Arbeitsschritten. Eine betonierter Laufgang hat außerdem den Nachteil, dass die Oberfläche nach dem Betonieren schnell glatt wird. Bei Ställen mit Böden aus herkömmlich vergossenem Beton wird dieses Problem noch dadurch verstärkt, dass schon nach kurzer Zeit des Betriebs, d.h. schon nach 3 bis 4 Jahren, wegen der Beanspruchung mit Harnsäure aus dem von den Tieren abgeschiedenen Harn, der Betonboden noch glatter wird, selbst wenn eine der bekannten Stallentmistungsanlagen zur Reinigung eines Stallbodens verwendet wird. Einen Stallboden, insbesondere einen Laufgang, mit einer Stallentmistungsanlage von den Exkrementen, insbesondere Harn und Kot, von Tieren in diesem Stall zu reinigen ist bekannt. Solche Stallentmistungsanlage sind z.B. offenbart in DE 197 06 073 C2, DE 101 17 077 C1 und DE 101 11 908 A1 von Hartmann sowie DE 94 20 979 U1. Solche Stallentmistungsanlagen weisen einen Mistschieber auf, der durch ein Seil auf dem Laufgang von einem Ende zum anderen Ende hin- und herbewegt wird und dazu eingerichtet ist Flüssigkeiten von dem Laufgang zu entfernen, wobei der Stallboden einen Kanal zur Aufnahme des Seils aufweist. Eine glatte Oberfläche eines Laufgangs hat jedoch den großen Nachteil, dass sich viele Tiere in dem Stall nur vorsichtig und mit kleinen Schritten über den Laufgang bewegen. Dies kann zu Ängstlichkeit bei den Tieren führen, sowie zu reduzierter Nahrungsaufnahme, da sich die Tiere nur ängstlich und weniger oft von den Liegemulden zum Futtertisch bewegen. Der Fleischertrag und/oder die Milchproduktion können darunter stark leiden. Außerdem kann dies zu Lahmheit und stiller Brunst bei diesen Tieren führen, was ebenso nachteilig für die Gesundheit der Tiere und den Ertrag mit diesen Tieren ist. Darüber hinaus kann es bei Tieren in der Brunst dazu kommen, dass sie ihre Vorsichtigkeit ablegen und sich zu schnell über den glatten Boden bewegen. Daher besteht die Gefahr, dass solche Tiere auf dem glatten Boden ausrutschen und sich Knochenbrüche zuziehen, insbesondere Bein- und Hüftbrüche, sodass diese Tiere notgeschlachtet werden müssen. Einen durch Vergießen von Beton hergestellten glatten Betonboden griffig zu machen ist jedoch aufwändig, insbesondere zeit- und kostenintensiv. Es wurde daher zwar schon versucht, einen Laufgang aus Betonfertigplatten herzustellen. Bisher wurden jedoch nur solche Stallböden bereitgestellt, bei denen die Liegemulden umfassenden Liegeboxen aus Liegemuldenplatten zumindest teilweise auf einem zuvor hergestellten Laufgang aufliegen, wobei keine Dichtigkeitsprobleme zwischen Liegemuldenplatten und Laufgang auftreten. Aus hygienischen Gründen ist dies wichtig, da keine Flüssigkeit, die Harn und/oder Fäkalien umfasst, in das Erdreich unter dem Stall gelangen soll. Ferner soll der Harn im Wesentlichen vollständig von einem Laufgang entfernt werden können, um die Glättebildung durch Harnsäure zu vermeiden. Wenn ein herkömmlicher Laufgang aus Betonplatten aufgebaut wird, werden diese bisher immer tiefer als die Liegemuldenplatten verlegt. Die Laufgangplatten und die Liegemuldenplatten wurden daher nicht auf einer gemeinsamen planen Fläche verlegt. Vielmehr musste bisher die Fläche auf welcher der Stall gebaut werden soll, für jeden Laufgang mit einem Graben versehen werden, in den die Laufgangplatten verlegt werden. Dies bedeutet für die Herstellung des Stalls, dass zusätzliche Arbeitsschritte anfallen. Der Graben muss nicht nur angelegt, dass heißt gegraben werden, es müssen außerdem die Oberflächen der Gräben, auf denen die Laufgangplatten verlegt werden, plan gemacht werden. Dies ist in einem Graben wegen seiner tieferen Lage nur umständlich zu erreichen. Ferner ergibt sich bei zusammenstoßenden Laufgangplatten und Liegemuldenplatten das Problem, eine zufrieden stellende Dichtigkeit zu gewährleisten, das in dem Maße gar nicht auftritt, wenn die Liegemuldenplatten überlappend zumindest teilweise auf den Laufgangplatten angeordnet sind.

Die DE 30 39 537 A1 offenbart ein Betonfertigteilesystem für einen Stallboden, umfassend Laufgangplatten aus Beton für einen Laufgang und Liegemuldenplatten aus Beton mit Liegemulden für Tiere, wobei die Laufgangplatten und Liegemuldenplatten auf einer im Wesentlichen planen Fläche verlegbar sind, und die Liegemuldenplatten mit den Laufgangplatten, mit denen sie nach einem Verlegen zusammenstoßen, verbindbar sind.

Aus NL 1 015 290 ist ein Stallboden, der einen Laufgang und Liegeboxen umfasst, bekannt, wobei der Laufgang einen Kanal zur Aufnahme eines Seils einer Stallentmistungsanlage aufweist.

Aus NL 1 013 163 ist Betonfertigteilesystem für den Aufbau von Stallböden bekannt.

Die Aufgabe der vorliegenden Erfindung ist es daher die oben beschriebenen Nachteile zu vermeiden und insbesondere ein Betonfertigteilesystem für einen Stallboden, einen Stallboden aus diesem Betonfertigteilesystem und einen durch das Betonfertigteilesystem einfacher herstellbaren und verbesserten Stall, sowie ein verbessertes Verfahren zu seiner Herstellung bereit zustellen, wobei insbesondere ein auf einfache Weise schneller herstellbarer Stall mit einem im Wesentlichen dichten Stallboden bereitgestellt werden soll, wobei die Breite eines Laufgangs variabel gestaltet und der Laufgang einfach gereinigt werden kann.

Diese Aufgaben werden durch das Betonfertigteilesystem nach Anspruch 1, den Stallboden nach Anspruch 14, den Stall nach Anspruch 18 und das Verfahren zur Herstellung eines Stalls nach Anspruch 19 gelöst. Weitere vorteilhafte Ausführungsformen finden sich in den jeweiligen Unteransprüchen.

Erfindungsgemäß wird ein Betonfertigteilesystem für einen Stallboden bereitgestellt, das folgendes umfasst:
(a) Laufgangplatten aus Beton für einen Laufgang und
(b) Liegemuldenplatten aus Beton mit Liegemulden für Tiere,
wobei die Laufgangplatten und Liegemuldenplatten auf einer gemeinsamen im Wesentlichen planen Fläche verlegbar sind, und die Liegemuldenplatten mit den Laufgangplatten, mit denen sie nach einem Verlegen zusammenstoßen, verbindbar sind, wobei der mindestens eine Laufgang zwei zusammenstoßende, nebeneinander verlegbare Reihen von jeweils zusammenstoßenden, hintereinander verlegbaren Laufgangplatten umfasst, wobei die Laufgangplatten derart ausgebildet sind, dass deren zwei Reihen einen Kanal bilden zur Aufnahme eines Seils einer Stallentmistungsanlage, wobei die Laufgangplatten von jeder der zwei Reihen jeweils mindestens eine Ausnehmung zur Aufnahme eines Verbindungselements aufweisen.

Damit kann ein Stall einfacher und schneller hergestellt werden, da für die Verlegung der Laufgangplatten und Liegemuldenplatten nur eine gemeinsame Fläche bereitgestellt werden muss. Diese gemeinsame Fläche kann einfacher und schneller planiert werden. Sämtliche Arbeitsschritte zur Schaffung von Gräben für tiefer als die Liegemuldenplatten zu verlegende Laufgangplatten entfallen. Da die Liegemuldenplatten mit den Laufgangplatten, mit denen sie nach einem Verlegen zusammenstoßen, verbindbar sind, gibt es keine Dichtigkeitsprobleme zwischen den Liegemulden und dem Laufgang aus Laufgangplatten. Die Dichtigkeit eines Laufgangs von einem Stallboden, der durch dieses System bereitgestellt wird, ist konstruktiv verbessert durch die Verlegung der Laufgangplatten und Liegemuldenplatten auf einer gemeinsamen Fläche, so dass die Laufgangplatten nicht einseitig durch die Liegemuldenplatten beschwert werden, und dadurch, dass die Liegemuldenplatten mit den anstoßenden Laufgangplatten verbindbar sind.

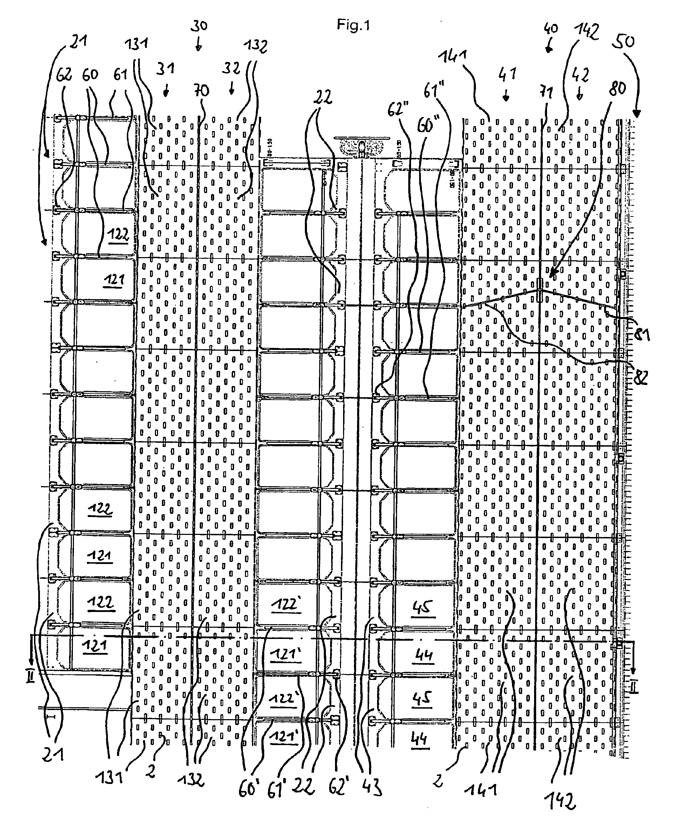

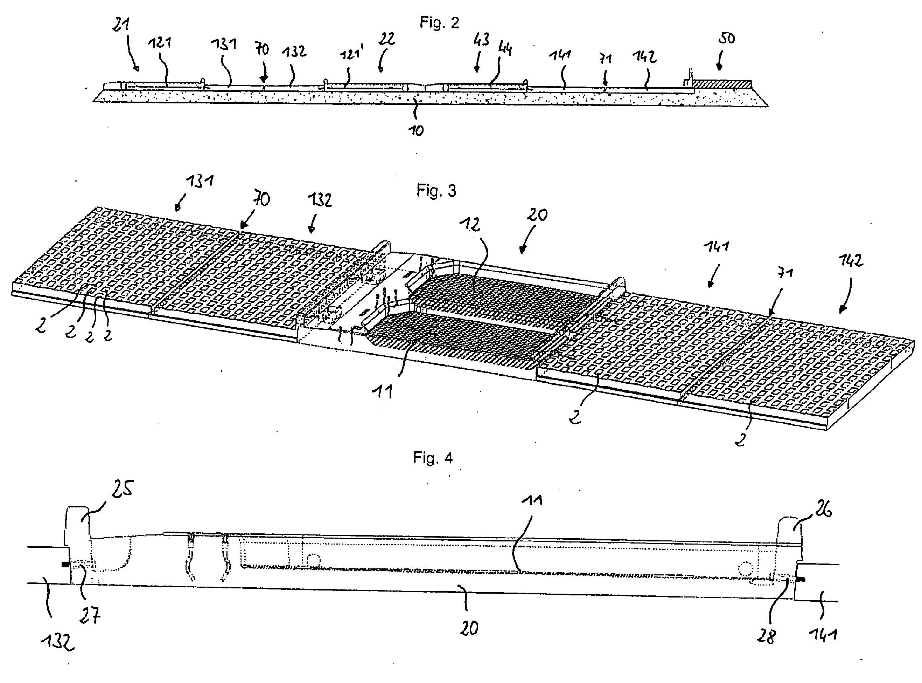

Besonders bevorzugt umfasst das Betonfertigteilesystem weitere Laufgangplatten, die nach einem Verlegen mit einem Futtertisch verbindbar sind. Damit kann ein Betonfertigteilesystem für einen Laufgang insbesondere zwei zusammenstoßende, nebeneinander verlegbare Reihen von jeweils zusammenstoßenden, hintereinander verlegbaren Laufgangplatten umfassen. So kann die Breite eines Laufgangs variabel gestaltet werden, und ein Aufbau aus Fertigbetonplatten auf einfache Weise gewährleistet werden. Die erfindungsgemäßen Laufgangplatten sollen nämlich nicht viel breiter als 4 m sein, da sonst die Verlegung der Betonplatten zu aufwändig wird. Die Breite der erfindungsgemäßen Platten, aus der sich wie in den Figuren 1 und 2 gezeigt der Abstand zwischen zwei Reihen von Liegemulden bzw. der Abstand zwischen einer Reihe von Liegemulden und dem Futtertisch ergibt, kann beliebig groß gestaltet werden, jeweils nach den Bedürfnissen, die für einen bestimmten Stall gewünscht werden. Die Breite einer Platte beträgt für eine schnelle Verlegung und für eine ausreichende Stabilität des Laufgangs insbesondere hinsichtlich einer Befahrbarkeit mit einem Fahrzeug jedoch vorzugsweise mindestens 50 cm, besonders bevorzugt mindestens 1 m, z.B. 1,30 m, ganz besonders bevorzugt mindestens 1,50 m, insbesondere 1,55 m, 1,80 m, 2,05 m, 2,30 m und 2,55 m. Die Platten können aber auch noch breiter sein, sollten jedoch nicht breiter als 4 m sein wie oben beschrieben. Besonders bevorzugt werden zwei Reihen solcher hintereinander, verlegbarer Platten nebeneinander verlegt, so dass sich Laufgänge miteiner Breite von mindestens 1 m, vorzugsweise mindestens 3 m, und bis zu 8 m Breite, besonders bevorzugt 2,60 m bis 5,10 m ergeben.

Besonders bevorzugt ist jede Laufgangplatte von einer der zwei oben beschriebenen Reihen mit der Laufgangplatte der anderen Reihe, mit der sie nach einem Verlegen zusammenstößt, verbindbar. Dazu können die Laufgangplatten von jeder der zwei Reihen jeweils mindestens eine Ausnehmung zur Aufnahme eines Verbindungselements aufweisen. Besonders bevorzugt weisen diese Laufgangplatten jeweils zwei Ausnehmungen zur Aufnahme eines Verbindungselements auf. Diese Ausnehmungen sind vorzugsweise an den Seiten der Laufgangplatten angeordnet, an denen die Laufgangplatten mit einer Laufgangplatte ihrer Reihe zusammenstoßen. Damit ist die Zugänglichkeit gewährleistet, selbst wenn die Ausnehmungen an der der im Wesentlichen planen Fläche zugewandten Unterseite angeordnet sind. Dies ist bevorzugt, da somit kein weiteres Dichtigkeitsproblem geschaffen, sondern vermieden wird.

Gemäß einer besonders vorteilhaften Ausführungsform ist jede Laufgangplatte der zwei Reihen nach einem Verlegen mit zwei Liegemuldenplatten oder dem Futtertisch verbindbar. Damit wird die Dichtigkeit des Laufgangs weiter verbessert. Denn damit sind auch zwei hintereinander verlegbare und nach einem Verlegen zusammenstoßende Laufgangplatten einer Reihe mit einer Laufgangplatte oder mit dem Futtertisch verbindbar. Dadurch wird die Dichtigkeit der in einer Reihe hintereinander verlegten, zusammenstoßenden Laufgangplatten eines Laufgangs von einem erfindungsgemäßen Stallboden vorteilhaft erhöht, wenn die verbindbaren Platten verbunden sind.

Gemäß einer bevorzugten Ausführungsform ist ein Laufgang, nach einem Verlegen der Laufgangplatten und Liegemuldenplatten und einem Verbinden der Laufgangplatten mit den Liegemuldenplatten, mit denen sie zusammenstoßen, gegebenenfalls nach einem Verbinden der weiteren Laufgangplatten mit dem Futtertisch, und vorzugsweise nach einem Verbinden der Laufgangplatten der zwei Reihen miteinander, mit einem Fahrzeug befahrbar und dabei so dicht, dass eine Flüssigkeit im Wesentlichen nicht durch den Laufgang in die im Wesentlichen plane Fläche sickert. Dies wird an den Seiten des Laufgangs zwischen Laufgangplatten und Liegemuldenplatten und gegebenenfalls zwischen Liegemuldenplatten und Futtertisch dadurch gewährleistet, dass die Laufgangplatten mit den Liegemuldenplatten und gegebenenfalls mit dem Futtertisch verbindbar ausgebildet sind, und die Laufgangplatten und Liegemuldenplatten auf einer gemeinsamen im Wesentlichen planen Fläche verlegt sind. Damit lastet das Gewicht der Liegemuldenplatten, gegebenenfalls zusätzlich mit dem Gewicht von ein oder zwei Tieren, nicht einseitig auf den Laufgangplatten. Zur bevorzugten weiteren Erhöhung der Dichtigkeit werden die zwei Reihen von Laufgangplatten, die nebeneinander verlegt sind und zusammenstoßen, miteinander verbunden. Wenn eine Laufgangplatte mit jeweils zwei Liegemuldenplatten oder einem Futtertisch verbunden wird, wird die Dichtigkeit der hintereinander in einer Reihe verlegten, zusammenstoßenden Laufgangplatten noch zusätzlich erhöht.

Die Liegemuldenplatten können auch mit Laufgangplatten von zwei Laufgängen verbindbar sein. Dies kann erforderlich sein, wenn die Fläche, auf welcher der Stall errichtet wird, begrenzt ist, und es nicht möglich ist, dass zwei Reihen von hintereinander verlegten Liegemuldenplatten zusammenstoßen.

Für eine besonders dichte Ausgestaltung des Laufgangs können die Laufgangplatten an den Seiten, mit denen sie nach dem Verlegen untereinander zusammen stoßen, ineinandergreifende, vorzugsweise überlappende, besonders bevorzugt formschlüssige, Vorsprünge und/oder Ausnehmungen aufweisen.

Gemäß einer besonders bevorzugten Ausführungsform wird ein Laufgang mit einer Stallentmistungsanlage gereinigt. Erfindungsgemäß sind die Laufgangplatten so ausgebildet, dass zwei Reihen der Laufgangplatten einen Kanal zur Aufnahme eines Seils einer Stallentmistungsanlage bilden. Besonders vorteilhaft weisen die Laufgangplatten in dem Kanal eine oder mehr Ausnehmung(en) zur Aufnahme von einem Auflageklotz oder mehr Auflageklötzen für das Seil einer Stallentmistungsanlage auf. Besonders bevorzugt weist der Kanal, wenn er von den zwei Reihen von Laufgangplatten, wie oben beschrieben gebildet wird, zur verbesserten Abdichtung eine halbrunde Form am Boden des Kanals zur Aufnahme einer Rundschnur auf. Die Vertiefung des Kanals ist vorzugsweise so ausgestaltet, dass die Rundschnur oberhalb mit einer Vergussmasse zur Ausbildung einer Zweiflankendichtung abgedichtet werden kann.

Eine besonders vorteilhafte Stallentmistungsanlage ist z.B. in DE 197 06 073 C2, DE 101 17 077 C1 und DE 101 11 908 A1 von Hartmann offenbart. Der Kanal zur Aufnahme des Seils ist vorzugsweise zur Oberfläche des Stallbodens, die auch eine für ein Fahrzeug befahrbare Oberfläche bilden kann, hin offen. So ist es vorteilhaft möglich, dass das Seil beim Betrieb der Stallentmistungsanlage, wenn es unter Spannung steht, aus dem Kanal herausgehoben wird und ohne Widerstand und Verschleiß benutzt wird. Nach dem Betrieb der Stallentmistungsanlage, wenn das Seil nicht mehr unter Zugspannung steht, kann es vollständig in dem Kanal aufgenommen werden und stellt so kein Hindernis und Verletzungsrisiko für die Tiere dar, die in dem Stall umherlaufen. Dadurch kann erreicht werden, dass das Seil der Stallentmistungsanlage nicht ständig unter Zugbeanspruchung stehen muss. Damit wird auch die Langlebigkeit der Stallentmistungsanlage vorteilhaft erhöht. Besonders vorteilhaft kann der Kanal auch der Führung des durch das Seil hin- und herbewegten Mistschiebers der Stallentmistungsanlage dienen. Bei langen Laufgängen mit mehr als 20 m Länge kann es nicht vermieden werden, dass selbst ein unter Spannung stehendes Seil etwas durchhängt, so dass es den Stallboden berühren kann. Dieses Durchhängen ist dann aber sehr problematisch, da das Seil, dann beim Betrieb der Stallentmistungsanlage wie eine Säge mit dem Seil auf den Stallboden einwirkt. Dadurch wird einerseits die Struktur des Bodens zerstört, was zu Undichtigkeiten führen kann, andererseits wird das Seil schneller verschlissen, so dass sich die Wartungsintervalle und der Arbeitsaufwand für die Stallentmistungsanlage erhöht. Daher ist es besonders bevorzugt, dass die Laufgangplatten und/oder die weiteren Laufgangplatten eine oder mehrere Ausnehmung(en) zur Aufnahme von einem Auflageklotz oder mehr Auflageklötzen für das Seil einer Stallentmistungsanlage aufweist. Dadurch kann vermieden werden, dass durch die Hin- und Herbewegung des Seils der Stallentmistungsanlage, das in der Regel als Stahlseil, besonders bevorzugt aus einem nicht rostenden und säurebeständigen Stahl, wie Nirosta^{®}, ausgelegt ist, Furchen in den Betonboden des Stalls gerieben werden. Die Auflageklötze werden vorzugsweise so über die Länge des Kanals verteilt in dem Kanal angeordnet, dass das Seil der Stallentmistungsanlage, insbesondere im gespannten Zustand, nur auf den Auflageklötzen aufliegt. Die Auflageklötze können aus einem Material mit erhöhter Abriebsfestigkeit bestehen, besonders bevorzugt aber auch aus einem anderen Material mit wenig Widerstand für das Seil, um dieses vor Abnutzung und einem Reißen zu schützen. Am meisten bevorzugt bestehen die Klötze aus Holz. Die Klötze können nämlich vorteilhaft leicht und einfach aus den in den Laufbodenplatten vorgesehenen Ausnehmungen herausgenommen und wieder eingesetzt werden, so dass der Austausch von verschlissenen Auflageklötzen problemlos erfolgen kann. Ferner nutzt das Holz das Seil nicht sonderlich ab, so dass dessen Haltbarkeit und Betriebsdauer erhöht wird.

Zur Verbesserung der Dichtigkeit können die Laufgangplatten ein Quellband aufweisen, vorzugsweise an jeder Seite, an der die Laufgangplatten mit einer anderen Laufgangplatte nach dem Verlegen zusammenstoßen.

Besonders vorteilhaft weisen die Liegemuldenplatten an den Seiten, an denen sie mit Laufgangplatten zusammenstoßen, einen in die Liegemuldenplatten, vorzugsweise Mulden, hineinreichenden Durchgang auf, durch den sie mit einem Befestigungsmittel, vorzugsweise einer Schraube, mit den Laufgangplatten verbindbar sind. Somit kann die Verbindung und die Dichtigkeit durch einfache Montage gewährleistet werden, und das Verfahren zur Herstellung eines erfindungsgemäßen Stalls wird ebenfalls vereinfacht. Insbesondere können erst alle Laufgangplatten und Liegemuldenplatten für einen Stall verlegt und dann die Liegemuldenplatten mit den Laufgangplatten verbunden werden. Nach einem Verbinden mit einem Befestigungsmittel, das auch ein Bolzen sein kann, der in den Durchgang geschlagen wird, kann der Durchgang für eine vorteilhafte Abdichtung mit einer Vergussmasse verschlossen werden.

Vorzugsweise besitzen die Liegemuldenplatten an den Seiten, an denen sie mit Laufgangplatten zusammenstoßen, einen über die Laufgangplatten hinausragenden Rand. Die Tiere müssen, dann zwar über diesen Rand steigen, wenn sie von ihrer Liegemulde auf den Laufgang wollen und umgekehrt, der Rand kann jedoch vorteilhaft als Anlagefläche für die Schieberarme eines Mistschiebers einer oben beschriebenen Stallentmistungsanlage dienen. So kann aber der Stall, Stallboden und Laufgang auf einfache Weise, und besonders vorteilhaft automatisch und regelmäßig von Urin und Kot befreit werden. Damit werden die hygienischen Verhältnisse im Stall und die Lebens- und Gesundheitsbedingungen für die Tiere darin verbessert.

Bei einer weiteren vorteilhaften Ausführungsform weisen die Liegemuldenplatten an den Seiten, an denen sie mit Laufgangplatten zusammenstoßen, eine gegenüber der Flächennormalen zu der im Wesentlichen planen Fläche eine Neigung auf. So können vorteilhaft erst alle Laufgangplatten verlegt werden, und dann erst die Liegemuldenplatten.

Damit können diese Arbeitsschritte und die dafür nötigen Arbeitsgeräte getrennt werden. Zuerst können die in der Regel etwas leichteren Laufgangplatten verlegt werden und dann die in der Regel etwas schwereren Liegemuldenplatten. Vorteilhaft drängen die später verlegten Liegemuldenplatten die vorherverlegten Laufgangplatten so noch enger zusammen.

Besonders bevorzugt sind die oben beschriebenen Liegemuldenplatten und Laufgangplatten, insbesondere die Laufgangplatten als Betonplatte ausgeführt für einen Stallboden mit einer Oberfläche, die an den durch den Körper- und Skelettbau vorgegebenen Gang von Vierbeinern, insbesondere Huftieren, vorzugsweise Rindern, angepasst sind. Sie weisen Vertiefungen mit einer Breite auf, die im Wesentlichen einer halben Fußbreite, d.h. im Wesentlichen einer Klauenbreite in Laufrichtung der Tiere, vorzugsweise Rindern, entspricht. Dadurch finden die Tiere in den Vertiefungen mit der Hälfte eines Fußes, vorzugsweise mit einer ihrer Klauen genügend Halt und rutschen in Laufrichtung seitlich im Wesentlichen nicht weg. Sie können, wenn überhaupt, nur geringfügig gegen eine Seitenwand der Vertiefung rutschen. Damit werden Verletzungen an der Klaue im Wesentlichen vermieden. Außerdem werden die Bänder und Gelenke geschont, und die Gesundheit und Ertragsmöglichkeiten bei der Tierhaltung mit den Tieren werden verbessert. Dies kann in einem zufriedenstellendem Ausmaß erreicht werden, wenn die Vertiefungen auf der Betonplatte solche Abstände voneinander aufweisen, dass ein Rind im Wesentlichen bei jedem Schritt mit einer Klaue in eine Vertiefung treten kann. Die Betonplatten werden vorzugsweise so in dem Stall verlegt, dass die Länge der Vertiefungen den durch einen Laufgang vorgegebenen bevorzugten Laufrichtungen der Rinder auf diesem Laufgang entspricht. Die von den meisten Tieren bevorzugten Laufrichtungen auf einem Laufgang können je nach Stallbereich verschieden sein.

Gemäß einer bevorzugten Ausführungsform weisen die Vertiefungen eine Länge auf, die größer ist als die Klauenlänge von Rindern in Laufrichtung, und vorzugsweise bis zu etwa die 2,5-fache, besonders bevorzugt bis zu etwa die 1,5-fache, Länge der Auftrittsfläche der Klaue der Rinder in Laufrichtung beträgt. Damit wird besonders vorteilhaft erreicht, dass ein Tier mit der gesamten Länge der Klaue in die Vertiefung treten kann ohne mit der Klaue an der Spitze oder dem hinteren Teil der Klaue an oder auf eine Kante der Vertiefung zu stoßen. Ein Wegrutschen in Längsrichtung tritt insbesondere bei Rindern wegen ihres Körper- und Skelettbaus und ihres sich daraus ergebenden Laufstils in der Regel nicht auf.

Besonders bevorzugt sind die Vertiefungen an ausgewachsene Rinder angepasst, da hier die Probleme der Beanspruchung von Gelenken und Bändern und auch der Klauen wegen des im Vergleich zu kleineren und leichteren Tieren größeren Gewichts stärker hervortritt. Außerdem ist Wertverlust höher, wenn ein ausgewachsenes Tier wegen eines Knochenbruchs notgeschlachtet werden muss und dann zum Beispiel für eine Milchproduktion ausfällt. Die Vertiefungen können aber auch an kleinere und andere Tiere als Rinder angepasst sein oder an Kälber. Dies ist in der Regel auch leicht möglich da andere Tiere und zum Teil auch Jungtiere in anderen Ställen oder Stallteilen untergebracht werden, und dort der Stallboden entsprechend an die jeweiligen Tiere angepasst werden kann. Bei einer besonders bevorzugten Ausführungsform der Erfindung weist ein Stall verschiedene Bereiche für die verschiedenartigen oder verschieden alten Tiere auf. Bei einer besonders vorteilhaften Ausführungsform können die Vertiefungen eine Breite von 5 bis 8 cm, vorzugsweise 5,5 bis 7,5 cm, besonders bevorzugt etwa 6,5 cm, aufweisen. Außerdem können die Vertiefungen eine Länge von 13 bis 17 cm, vorzugsweise etwa 15 cm, aufweisen. Besonders bevorzugt die Vertiefungen sind durch Stege voneinander getrennt, die eine Breite von etwa 3 bis 9 cm, vorzugsweise 5 bis 7 cm, aufweisen

Besonders vorteilhaft können die Vertiefungen eine Tiefe von 3 bis 15 mm, vorzugsweise 3 bis 10 mm, besonders bevorzugt 3 bis 8, am meisten bevorzugt 3 bis 5 mm, z.B. etwa 4 mm, aufweisen. Damit kann erreicht werden dass die Verletzungsgefahr der Klauen noch weiter reduziert ist. Noch vorteilhafter können die Vertiefungen abgeschrägte Seitenwände besitzen. Dadurch können die Tiere leichter in die Vertiefungen hineinrutschen und auch wieder heraussteigen. Besonders vorteilhaft sind die Längsseitenwände einfach abgeschrägt und weisen vorzugsweise gegenüber der Vertikalen eine Neigung von 10° bis 30°, vorzugsweise etwa 20°, auf. Dadurch wird besonders vorteilhaft ein seitlicher Halt in Laufrichtung der Tiere erreicht. Ferner wird durch die Abschrägung der Seitenwände das Verletzungsrisiko auch bei einem Rutschen der Tiere gegen die abgeschrägte Seitenwand verringert. Die Seitenwände in der Breitenerstreckung können zweifach abgeschrägt und vorzugsweise gegenüber der Vertikalen eine erste Neigung von 10° bis 40°, vorzugsweise etwa 25°, und eine zweite Neigung von 60° bis 80°, vorzugsweise etwa 72° aufweisen. In Laufrichtung und entsprechender Längsrichtung der Vertiefung ist ein Rutschen insbesondere bei Rindern unwahrscheinlich. Besonders vorteilhaft sind die Vertiefungen versetzt zueinander angeordnet. Bei einer besonders bevorzugten Ausführungsform ist die Anzahl und der Abstand der Vertiefungen so gewählt, dass die Tiere bei einem normalen Gang bei jedem Schritt mit einer Klaue in eine Vertiefung treten können.

Besonders bevorzugt weist eine erfindungsgemäße Betonplatte mit den oben beschriebenen Vertiefungen eine Ausnehmung zur Aufnahme eines Seils einer Stallentmistungsanlage auf. Damit kann der Stallboden besonders leicht und einfach von den Exkrementen der Tiere gereinigt werden und eine Glättebildung durch ein Festsetzen von Harnstein vermieden werden. Besonders vorteilhaft ist der Einsatz einer Stallentmistungsanlage, wenn die Vertiefungen zweifach abgeschrägte Seitenwände in Breitenerstreckung haben, und die Betonplatten mit Vertiefungen so angeordnet sind, dass in der Längsrichtung der Vertiefung auch die Räumrichtungen eines Mistschiebers einer Stallentmistungsanlage verlaufen. In dieser Richtung, der Räumrichtung, eines Mistschiebers auf einem Laufgang eines Stalls verlaufen auch die bevorzugten Laufrichtungen der Rinder auf dem Laufgang. Daher ist diese Ausrichtung der Betonplatten mit den Vertiefungen besonders bevorzugt. Dadurch kann nämlich durch Stroh, das als Einstreu in den Liegemulden verteilt wird und von den Tieren in den Laufgang geschleppt wird, zusammen mit dem Mistschieber eine zusätzliche Reinigung der Laufgangplatten, insbesondere der Vertiefungen auf der Oberfläche, erfolgen. Besonders vorteilhafte Stallentmistungsanlagen sind z.B. in DE 197 06 073 C2, DE 101 17 077 C1 und DE 101 11 908 A1 von Hartmann offenbart. Solche Stallentmistungsanlagen weisen einen Mistschieber auf, der durch ein Seil auf einem Laufgang von einem Ende zum anderen Ende hin- und herbewegt wird und dazu eingerichtet ist, Flüssigkeiten von dem Laufgang zu entfernen. Besonders bevorzugt weisen die Mistschieber zusätzlich Borsten oder andere Reinigungselemente, wie Gummilippen auf, die in Räumrichtung eines Mistschiebers hinter der Räumklappe angeordnet sind und in die Vertiefungen in der Oberfläche der Laufgangplatten hineinragen können. Dadurch kann ein Laufgang besonders sauber gereinigt werden, und die hygienischen Verhältnisse in dem Stall verbessert werden.

Erfindungsgemäß wird ferner ein Stallboden bereitgestellt, der die oben beschriebenen Laufgangplatten und Liegemuldenplatten des erfindungsgemäßen Betonfertigteilesystem, die auf einer gemeinsamen im Wesentlichen planen Fläche verlegt sind, wobei die Liegemuldenplatten mit den Laufgangplatten, mit denen sie zusammenstoßen, verbunden sind, und mindestens einen Laufgang umfasst. Dieser Stallboden ist nicht nur einfacher und schneller zu verlegen, sondern der Laufgang ist auch besonders dicht. Es kann damit auch ein variabel zu verlegender Stallboden geschaffen werden, der die zur Verfügung stehende Grundfläche eines Stalls ideal ausnutzen kann. Insbesondere kann ein Stallboden geschaffen werden, der im Bereich des Laufgangs zwei zusammenstoßende, nebeneinander verlegte Reihen von jeweils zusammenstoßenden, hintereinander verlegten Laufgangplatten umfasst. Für eine besonders dichte und sichere Verbindung kann der Stallboden für jeweils zwei zusammenstoßende, nebeneinander verlegte Laufgangplatten mindestens ein Verbindungselement aufweisen, das diese Laufgangplatten verbindet. Besonders vorteilhaft ist jede Laufgangplatte der zwei Reihen entweder mit zwei Liegemuldenplatten oder mit dem Futtertisch verbunden, um die Dichtigkeit der hintereinander verlegten, zusammenstoßenden Laufgangplatten einer Reihe zu erhöhen.

Durch die Erfindung wird daher insbesondere ein Stallboden geschaffen, wobei der Laufgang mit einem Fahrzeug befahrbar und dabei so dicht ist, dass eine Flüssigkeit im Wesentlichen nicht durch den Laufgang sickert und vorzugsweise vorteilhaft an Tiere angepasste Oberflächen aufweisen kann.

Außerdem wird durch die Erfindung ein vorteilhafter Stall bereitgestellt, der nicht nur leichter und schneller zu bauen ist, sondern auch noch einen vorteilhaft dichten Stallboden aufweist, der insbesondere ein seitliches Wegrutschen von Tieren verhindern kann.

Erfindungsgemäß wird auch ein Verfahren zur Herstellung eines Stalls bereitgestellt, wobei das Verfahren die folgenden Schritte umfasst:
(A) ein Bereitstellen einer im Wesentlichen planen Fläche, vorzugsweise aus Schotter oder Kies,
(B) ein Verlegen von Laufgangplatten und Liegemuldenplatten aus Beton von einem oben beschriebenen Betonfertigteilesystem auf der im Wesentlichen planen Fläche,
(C) ein Verbinden der Liegemuldenplatten mit den Laufgangplatten, mit denen sie zusammenstoßen, zur Ausbildung eines Stallbodens,
(D) gegebenenfalls ein Verbinden von Laufgangplatten mit einem Futtertisch und
(E) Verbinden von zusammenstoßenden, nebeneinander verlegten Reihen von jeweils zusammenstoßenden, hintereinander verlegten Laufgangplatten, die einen Laufgang bilden.

Mit diesem Verfahren kann auf schnelle und einfache Weise ein vorteilhafter Stall mit einem vorteilhaft dichtem Stallboden geschaffen werden, da für die Laufgangplatten und Liegemuldenplatten nur eine gemeinsame im Wesentlichen plane Fläche geschaffen werden muss, und Arbeitsschritte für die Schaffung von ein oder mehr Auflageflächen von tiefer als die Liegemuldenplatten zu verlegenden Laufgangplatten entfallen.

Dadurch ist es möglich einen Stallboden und Stall schneller herzustellen, der auch gegenüber Flüssigkeiten dicht ist, wenn er mit einem Fahrzeug befahren wird, und der verhindert, dass bei einem Befahren des Stallbodens mit einem Fahrzeug wegen Undichtigkeiten eine Flüssigkeit, insbesondere Harn und Fäkalien, in den Unterboden unter dem Stallboden sickert. Bevorzugt ist der Laufgang des Stallbodens so dicht ausgebildet, dass ihn ein Fahrzeug mit bis zu 8 t pro Achse befahren kann, wobei eine Flüssigkeit im Wesentlichen nicht durch den Laufgang sickert.

Im Folgenden wird die Erfindung anhand von Zeichnungen näher erläutert. Es zeigt
- Figur 1: eine schematische Draufsicht auf einen Stallboden eines erfindungsgemäßen Stalls aus einem erfindungsgemäßen Betonfertigteilesystem;
- Figur 2: einen Querschnitt durch den Stall gemäß Figur 1;
- Figur 3: einen Ausschnitt einer weiteren Ausführungsform eines erfindungsgemäßen Stalls, der erfindungsgemäße Betonplatten, die einen Teil eines Laufgangs bilden und eine bevorzugte Liegemuldenplatte umfasst, in einer Perspektivansicht;
- Figur 4: eine Detailansicht eines Querschnitts von Figur 3;
- Figur 5: eine Detailansicht des Querschnitts von Figur 4;
- Figur 6: eine Detailansicht des Querschnitts von Figur 4;
- Figur 7: eine Detailansicht von Figur 3;
- Figur 8: einen Querschnitt der Detailansicht von Figur 7;
- Figur 9: einen Querschnitt durch einen Laufgang von in einer Reihe hintereinander verlegten Laufgangplatten;
- Figur 10: einen Ausschnitt einer bevorzugten Ausführungsform eines erfindungsgemäßen Stallbodens mit Laufgangplatten und teilweise dargestellten Liegemuldenplatten in einer Perspektivansicht;
- Figur 11: eine Detailansicht der Laufgangplatten der Perspektivansicht von Figur 10;
- Figur 12: eine Draufsicht der Detailansicht von Figur 11 als Querschnitt durch zwei Laufgangplatten von nebeneinander verlegten, zusammenstoßenden Reihen von hintereinanderverlegten, zusammenstoßenden Laufgangplatten;
- Figur 13: einen Querschnitt durch einen Laufgang von in einer Reihe hintereinander verlegten, zusammenstoßenden Laufgangplatten;
- Figur 14: eine schematische Draufsicht auf eine erfindungsgemäße Betonplatte mit einer Projektion einer Klaue eines Rinds;
- Figur 15: einen Querschnitt durch die Betonplatte der Figur 14 gemäß der Linie II-II;
- Figur 16: einen Querschnitt durch die Betonplatte der Figur 14 gemäß der Linie III-III;
- Figur 17: die Betonplatte gemäß Figur 14 in einer Perspektivansicht;
- Figur 18: einen Querschnitt durch einen Laufgang von in einer Reihe hintereinander verlegten Laufgangplatten einer weiteren Ausführungsform;
- Figur 19: eine Detailansicht einer weiteren Ausführungsform eines Querschnitts von einer Liegemuldenplatte, die an eine Laufgangplatte stößt.

In den verschiedenen Figuren sind entsprechende Bauteile, Elemente und Gegenstände mit gleichen Bezugszeichen versehen.

Die Figur 1 zeigt eine schematische Draufsicht auf einen Stallboden eines erfindungsgemäßen Stalls aus einem erfindungsgemäßen Betonfertigteilesystem. Der gezeigte Stallboden weist zwei Laufgänge 30 und 40 auf. Der Laufgang 30 besteht aus einer ersten 31 und einer zweiten Reihe 32 von hintereinander verlegten, zusammenstoßenden Laufgangplatten 131 bzw. 132. Die Reihe 31 besteht aus zusammenstoßenden, hintereinander verlegten Laufgangplatten 131. Sie stößt mit der Reihe 32 aus zusammenstoßenden, hintereinander verlegten Laufgangplatten 132 zusammen. Die zwei zusammenstoßenden Reihen 31 und 32 sind nebeneinander verlegt und bilden den Laufgang 30 zwischen zwei Reihen von hintereinander verlegten Liegemuldenplatten 21 bzw. 22. An den Seiten, an denen die Laufgangplatten und 131 und 132 der Reihen 31 und 32 zusammenstoßen, bilden sie den Kanal 70 zur Aufnahme eines Seils einer Stallentmistungsanlage. Die Laufgangplatten 131 sind mit der Reihe aus hintereinander verlegten Liegemuldenplatten 21 verbunden. Die Liegemuldenplatten sind als Doppelbox mit den zwei Liegemulden 121 und 122 ausgeführt. Die Laufgangplatten 131 sind versetzt zu den Liegemuldenplatten 21 angeordnet. Die Laufgangplatten 131 sind dabei jeweils so angeordnet, dass sie mit zwei verschiedenen Liegemuldenplatten 21 verbunden sind. Dadurch wird die Dichtigkeit des Laufgangs an den Stößen zwischen den hintereinander verlegten Laufgangplatten 131 erhöht. Da die Laufgangplatten und Liegemuldenplatten bevorzugt die gleiche Länge aufweisen, stoßen die hintereinander verlegten Laufgangplatten 131 in der Mitte einer Liegemuldenplatte 21 zusammen, wo auf der Liegemuldenplatte 21 der Trennbügel 60 angeordnet ist. Der Trennbügel 60 dient dazu, die Liegemulden 121 und 122 einer Liegemuldenplatte 21 voneinander zu trennen, so dass Tiere ungestört von dem Nachbartier in den Liegemulden liegen können. Zwischen den Liegemuldenplatten 21 sind weitere Trennbügel 61 vorgesehen, um die Liegemulden 121 und 122 von benachbarten Liegemuldenplatten 21 abzutrennen. Die Trennbügel 61 sind mit der Platte 62 jeweils auf zwei Liegemuldenplatten verschraubt. Durch diese Verbindung, wird die Dichtigkeit des Laufgangs und der Zusammenhalt des gesamten Stallbodens noch weiter verbessert. Die Laufgangplatten 132 sind ebenfalls versetzt zu den Liegemuldenplatten 22 angeordnet. Das heißt, die Laufgangplatten 132 sind so angeordnet, dass sie mit zwei verschiedenen Liegemuldenplatten 22 verbunden sind. Dadurch wird die Dichtigkeit des Laufgangs an den Stößen zwischen den hintereinander verlegten Laufgangplatten 132 erhöht. Da die Laufgangplatten und Liegemuldenplatten bevorzugt die gleiche Länge aufweisen, stoßen die hintereinander verlegten Laufgangplatten 132 in der Mitte einer Liegemuldenplatte 22 zusammen, wo auf der Liegemuldenplatte 22 der Trennbügel 60 angeordnet ist. Der Trennbügel 60' dient dazu, die Liegemulden 121' und 122' einer Liegemuldenplatte 22 voneinander zu trennen, so dass Tiere ungestört von dem Nachbartier in den Liegemulden liegen können. Zwischen den Liegemuldenplatten 22 sind weitere Trennbügel 61' vorgesehen, um die Liegemulden 121' und 122' von benachbarten Liegemuldenplatten 22 abzutrennen. Die Trennbügel 61' sind mit der Platte 62' jeweils auf zwei Liegemuldenplatten 22 verschraubt.

Durch diese Verbindung, wird die Dichtigkeit des Laufgangs 30 und der Zusammenhalt des gesamten Stallbodens noch weiter verbessert.

Der Laufgang 40 besteht aus einer ersten 41 und einer zweiten Reihe 42 von hintereinander verlegten, zusammenstoßenden Laufgangplatten 141 bzw. 142. Die Reihe 41 aus zusammenstoßenden, hintereinander verlegten Laufgangplatten 141 stößt mit der Reihe 42 aus zusammenstoßenden, hintereinander verlegten Laufgangplatten 142 zusammen. Die zwei Reihen 41 und 42 sind nebeneinander verlegt und bilden den Laufgang 40 zwischen einer Reihe von hintereinander verlegten, zusammenstoßenden Liegemuldenplatten 43 und dem nur teilweise gezeigten Futtertisch 50. Die Laufgangplatten 141 sind mit der Reihe aus hintereinander verlegten Liegemuldenplatten 43 verbunden. Die Liegemuldenplatten 43 sind als Doppelbox mit den zwei Liegemulden 45 und 46 ausgeführt. Die Laufgangplatten 141 sind versetzt zu den Liegemuldenplatten 43 angeordnet. Die Laufgangplatten 141 sind dabei jeweils so angeordnet, dass sie mit zwei verschiedenen Liegemuldenplatten 43 verbunden sind. Dadurch wird die Dichtigkeit des Laufgangs an den Stößen zwischen den hintereinander verlegten Laufgangplatten 141 erhöht. Da die Laufgangplatten und Liegemuldenplatten bevorzugt die gleiche Länge aufweisen, stoßen die hintereinander verlegten Laufgangplatten 141 in der Mitte einer Liegemuldenplatte 43 zusammen, wo auf der Liegemuldenplatte 43 der Trennbügel 60" angeordnet ist. Der Trennbügel 60" dient dazu, die Liegemulden 44 und 45 einer Liegemuldenplatte 43 voneinander zu trennen, so dass Tiere ungestört von dem Nachbartier in den Liegemulden liegen können. Zwischen den Liegemuldenplatten 43 sind weitere Trennbügel 61" vorgesehen, um die Liegemulden 44 und 45 von benachbarten Liegemuldenplatten 43 abzutrennen. Die Trennbügel 61" sind mit der Platte 62" jeweils auf zwei benachbarten Liegemuldenplatten 43 verschraubt. Durch diese Verbindung, wird die Dichtigkeit des Laufgangs 40 und der Zusammenhalt des gesamten Stallbodens noch weiter verbessert. Die Laufgangplatten 142 sind mit dem Futtertisch 50 verbunden. An den Seiten, an denen die Laufgangplatten 141 und 142 der Reihen 41 und 42 zusammenstoßen, bilden sie den Kanal 71 zur Aufnahme eines Seils einer Stallentmistungsanlage. Die Stallentmistungsanlage umfasst den Mistschieber 80 mit den Schieberarmen 81 und 82. Der Mistschieber wird kann in dem Laufgang 40 durch ein Seil hin- und herbewegt werden. Das Seil kann nach dem Betrieb des Mistschiebers von dem Kanal 71 aufgenommen werden und stellt kein Hindernis dar, da es vollständig in dem Kanal 71, vorzugsweise auf Auflageklötzen, abgelegt werden kann.

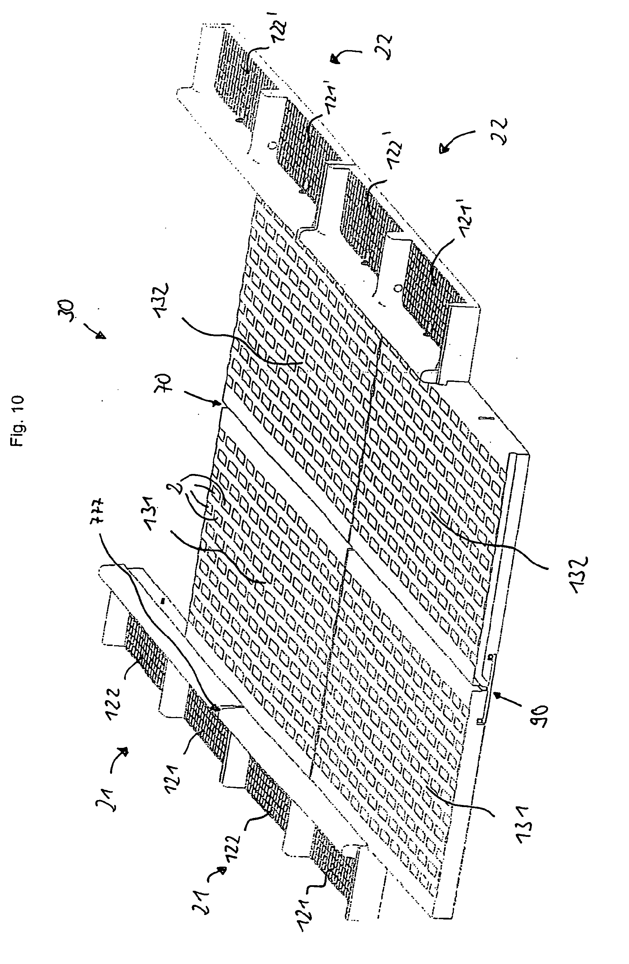

Die Figur 2 zeigt einen Querschnitt durch den Stall der Figur 1 gemäß der Linie II-II. Die Liegemuldenplatten 21, 22, 43 und Laufgangplatten 131, 132, 141 und 143 sind auf einer gemeinsamen im Wesentlichen planen Fläche des Unterbodens 10 verlegt. Da die Liegemuldenplatten nicht auf den Laufgangplatten aufliegen, werden die Laufgangplatten nicht einseitig belastet. Dadurch werden die zusammenstoßenden Laufgangplatten 131 und 132 bzw. 141 und 142 nicht in der Mitte der Laufgänge 30 bzw. 40, an denen die Laufplatten zusammenstoßen, angehoben. Damit wird konstruktiv ein Problem für eine Undichtigkeit von Laufgängen vermieden. Besonders bevorzugt werden die Laufgangplatten 131 und 132 bzw. 141 und 142 miteinander verbunden, wie z.B. in den Fig. 10 bis 13 gezeigt. Um die Dichtigkeit zwischen Laufgangplatten und Liegemuldenplatten zu gewährleisten, sind die Laufgangplatten 131 mit den Liegemuldenplatten 21, die Laufgangplatten 132 mit den Liegemuldenplatten 22, die Laufgangplatten 141 mit den Liegemuldenplatten 43 verbunden. Die Laufgangplatten 142 sind mit dem Futtertisch 50 verbunden. Zwischen dem Unterboden 10 und den Liegemuldenplatten 21, 22 und 43 sowie den Laufgangplatten 131, 132, 141 und 143 ist vorzugsweise eine Schotter- oder Kiesschicht vorgesehen, die als Frostschutzschicht 4 bis 10 cm, besonders bevorzugt 5 bis 7 cm, dick sein kann. Durch die Erfindung kann der weitgehend größte Teil der Grundfläche eines Stalls einfach bereitgestellt werden. Bei einer besonders bevorzugten Ausführungsform der Erfindung wird der Futtertisch ebenfalls aus Fertigbetonteilen aufgebaut. Diese Fertigbetonteile werden dann besonders bevorzugt ebenfalls auf der gleichen im Wesentlichen planen Fläche wie die Laufgangplatten und Liegemuldenplatten verlegt. Dann kann die gesamte Grundfläche eines Stalls und damit der Stall besonders leicht und schnell bereitgestellt werden. Um eine besonders hohe Stabilität und Dichtigkeit des Laufgangs zu erreichen, ist es bevorzugt, dass die Laufgangplatten 131 und 132 bzw. 141 und 142 gleich groß sind, damit bei einem Befahren des Laufgangs mit einem Fahrzeug, zum Beispiel einem Einstreuwagen oder auch mit einem Reinigungswagen oder Futtermischwagen, die Platten gleichmäßig belastet werden. Eine solche Stabilität ist hinsichtlich der Dichtigkeit des gebildeten Laufgangs wichtig. Bevorzugt weisen Laufgangplatten 131 und 132 bzw. 141 und 142 an den Seiten, an denen sie nach einem Verlegen zusammenstoßen und den Kanal 70 bzw. 71 bilden, eine Länge von mindestens 1,50 m auf, besonders bevorzugt eine Länge von mindestens 2 m und ganz besonders bevorzugt eine Länge von etwa 2,50. Sie können aber auch noch länger sein. Sie sollten jedoch nicht viel länger als 4 m sein, da sonst die Verlegung der Betonplatten zu aufwändig wird. Mit Länge ist die räumliche Ausdehnung der Platten in Richtung des Kanals gemeint. Die Breite der erfindungsgemäßen Platten, aus der sich also in der Figur der Abstand zwischen den zwei Reihen von Liegemuldenplatten 21 und 22 bzw. der Abstand zwischen der Reihe von Liegemulden 43 und dem Futtertisch 50 ergibt, kann ebenfalls verschieden groß gestaltet werden, jeweils nach den Bedürfnissen, die für einen bestimmten Stall gewünscht werden. Die Breite einer Platte beträgt für eine ausreichende Stabilität der Anordnung hinsichtlich der Befahrbarkeit mit einem Fahrzeug jedoch vorzugsweise mindestens 50 cm, besonders bevorzugt mindestens 1 m, ganz besonders bevorzugt mindestens 1,50 m. Die Platten können aber auch noch breiter sein. Sie sollten jedoch nicht viel breiter als 4 m sein, da sonst die Verlegung der Betonplatten zu aufwändig wird.

Die Figur 3 zeigt einen Ausschnitt einer weiteren Ausführungsform eines erfindungsgemäßen Stalls, der erfindungsgemäße Laufgangplatten 131 und 132 eines Laufgangs und die Laufgangplatten 141 und 142 eines weiteren Laufgangs und eine bevorzugte Liegemuldenplatte 20 umfasst, in einer Perspektivansicht. Die Liegemuldenplatte 20 ist mit den Laufgangplatten 132 und 141 von zwei verschiedenen Laufgängen verbindbar. Sie weist daher an beiden Seiten, an denen sie mit einer Laufgangplatte zusammenstößt, einen über die Laufgangplatten hinausragenden Rand auf. Diese Ränder sind in Fig. 4 gezeigt (25 und 26). Die in den Figuren 1 und 2 gezeigten Liegemuldenplatten benötigen jeweils nur einen solchen Rand, da sie nur an einer Seite mit Laufgangplatten zusammenstoßen. Diese Ränder bilden die Seitenwände der Laufgänge und dienen als Anschlag für die Enden der Schieberarme eines Mistschiebers, der in einer bevorzugten Ausführungsform eines Stalls der Erfindung in einem Laufgang zum Räumen von Kot und Harn umfassenden Flüssigkeiten hin- und herbewegt wird.

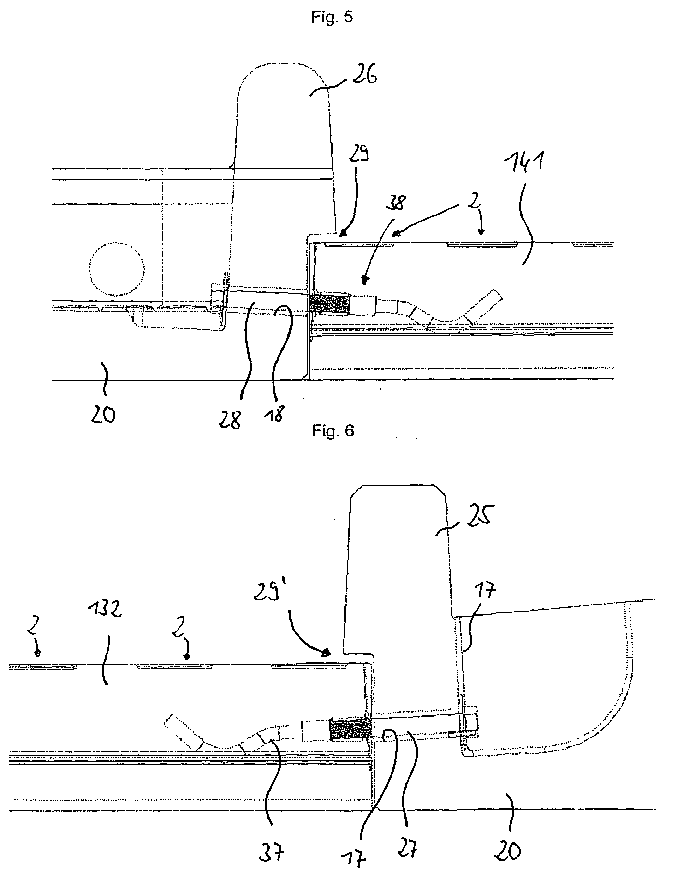

Die Figur 4 zeigt eine Detailansicht eines Querschnitts von Figur 3. Die Liegemuldenplatte 20 ist mit den Laufgangplatten 132 und 141 von zwei verschiedenen Laufgängen verbunden. Sie weist an der Seite, an der sie mit der Laufgangplatte 132 zusammenstößt, den über die Laufgangplatte 132 hinausragenden Rand 25 auf. An der Seite, an der sie mit der Laufgangplatte 141 zusammenstößt, besitzt sie den über die Laufgangplatte 141 hinausragenden Rand 26. Diese Ränder der Liegemuldenplatte bilden die Seitenwände der Laufgänge und können als Anschlag für die Enden der Schieberarme eines Mistschiebers dienen. Die Verbindung der Liegemuldenplatte 20 mit den Laufgangplatten 132 bzw. 141 erfolgt über die Schrauben 27 und 28, die durch in die Liegemuldenplatte 20 hineinreichende Durchgänge (siehe Fig. 5 und 6: 17 und 18) verschraubt sind. Die Seiten der Laufgangplatte 20, mit denen sie gegen die Laufgangplatte 132 bzw. 141 stößt, ist etwas gegen die Normale zu der Fläche, auf der die Platten verlegt werden, geneigt. Dadurch können vorteilhaft erst die Laufgangplatten verlegt werden und erst dann die Liegemuldenplatten 20.

Die Figur 5 zeigt eine Detailansicht des Querschnitts von Figur 4 in dem Bereich, in dem die Liegemuldenplatte 20 mit der Laufgangplatte 141 zusammenstößt und verbunden ist. Die Liegemuldenplatte 20 ist mit der Laufgangplatte 141 über die Schraube 28 verbunden. Die Schraube 28 kann bequem nach einem Verlegen der Liegemuldenplatten und Laufgangplatten eines Stalls durch den in die Liegemulde 11 hineinreichenden Durchgang 18 in die Verankerungshülse 38 geschraubt werden, die in der Laufgangplatte 141 vorgesehen ist. Anstelle der Schraube kann auch ein Verbindungsbolzen oder anderes Befestigungsmittel vorgesehen sein. Nach dem Verbinden kann der Durchgang 18 mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 141 ragende Rand 26 der Liegemuldenplatte 20 kann für eine verbesserte Abdichtung zwischen Liegemuldenplatte und Laufgang etwas über die Laufgangplatte hinausgezogen sein für eine gewisse Überlappung. Besonders bevorzugt stoßen die Laufgangplatte und Liegemuldenplatte formschlüssig und besonders bevorzugt überlappend zusammen. Der Spalt 29 zwischen der Liegemuldenplatte und Laufgangplatte kann, nach einem Verbinden der Laufgangplatte 141 mit der Liegemuldenplatte 20 mit der Schraube 28, mit einer Vergussmasse vergossen und damit noch besser abgedichtet werden.

Die Figur 6 zeigt eine Detailansicht des Querschnitts von Figur 4 in dem Bereich, in dem die Liegemuldenplatte 20 mit der Laufgangplatte 132 zusammenstößt und verbunden ist. Die Liegemuldenplatte 20 ist mit der Laufgangplatte 132 über die Schraube 27 verbunden. Die Schraube 27 kann bequem nach einem Verlegen der Liegemuldenplatten und Laufgangplatten eines Stalls durch den in die Liegemuldenplatte 20 hineinreichenden Durchgang 17 in die Verankerungshülse 37 geschraubt werden, die in der Laufgangplatte 132 vorgesehen ist. Der Durchgang 17 ist zur Oberseite der Liegemuldenplatte 20 hin in geeigneter Weise zugänglich ausgestaltet, sodass die Schraube 27 nach einem Verlegen der Liegemuldenplatte 20 und der Laufgangplatte 132 eingesetzt und angezogen werden kann. Anstelle der Schraube kann auch ein Verbindungsbolzen oder anderes Befestigungsmittel vorgesehen sein. Nach dem Verbinden kann der Durchgang 17, der sich bis zur Oberseite der Liegemuldenplatte 20 erstreckt, mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 132 ragende Rand 25 der Liegemuldenplatte 20 kann für eine verbesserte Abdichtung zwischen Liegemuldenplatte und Laufgang etwas über die Laufgangplatte hinausgezogen sein für eine gewisse Überlappung. Besonders bevorzugt stoßen die Laufgangplatte und Liegemuldenplatte formschlüssig und besonders bevorzugt überlappend zusammen. Der Spalt 29' zwischen der Liegemuldenplatte und Laufgangplatte kann, nach einem Verbinden der Laufgangplatte 132 mit der Liegemuldenplatte 20 mit der Schraube 27, mit einer Vergussmasse vergossen und damit noch besser abgedichtet werden.

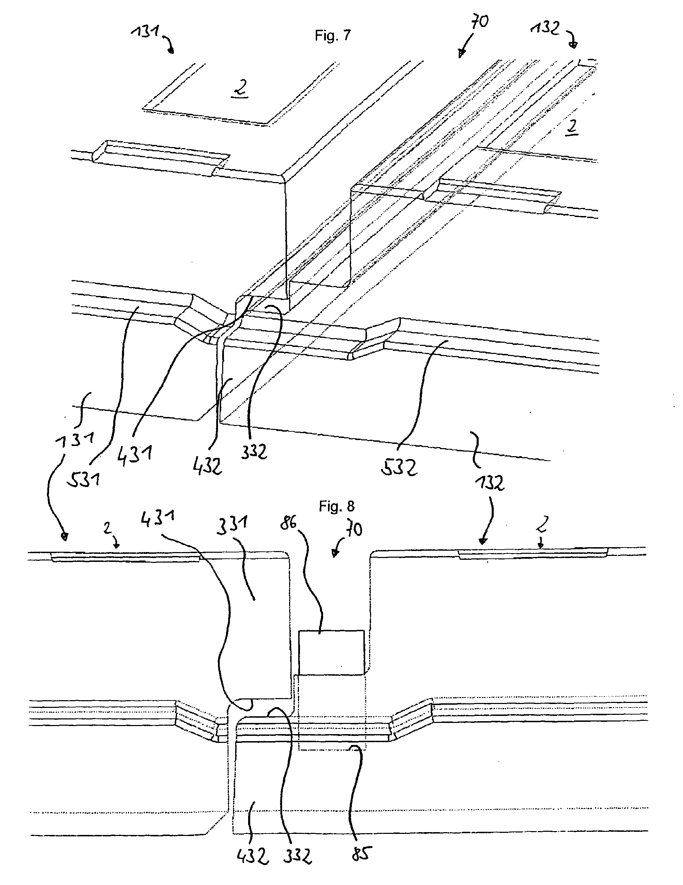

Die Figur 7 zeigt eine Detailansicht von Figur 3 in dem Bereich, in dem die Laufgangplatten 131 und 132 von zwei hintereinander verlegten, zusammenstoßenden Reihen 31 und 32 (siehe Fig. 1) zusammenstoßen, in einer Perspektivansicht. Die Laufgangplatten 131 und 132 weisen dabei an dem gemeinsamen Stoß ineinander greifende und teilweise überlappende Ausnehmungen und Vorsprünge auf. Die Laufgangplatte 131 weist den Vorsprung 331 auf, der von der Ausnehmung 332 der Laufgangplatte 132 aufgenommen wird. Die Laufgangplatte 132 weist den Vorsprung 432 auf, der von der Ausnehmung 431 der Laufgangplatte 131 aufgenommen wird. Die Ausnehmung 332 ist so groß ausgestaltet, dass sie mit dem nicht vollständig in sie hinein ragenden Vorsprung 331 zusammen den Kanal 70 bildet. Die Vorsprünge 331 und 432 bzw. Ausnehmungen 332 und 431 können so aufeinander angepasst sein, dass sie ohne Quellband dicht sind. Bei einer alternativen Ausführungsform ist ein zusätzliches Quellband zur verbesserten Abdichtung vorgesehen.

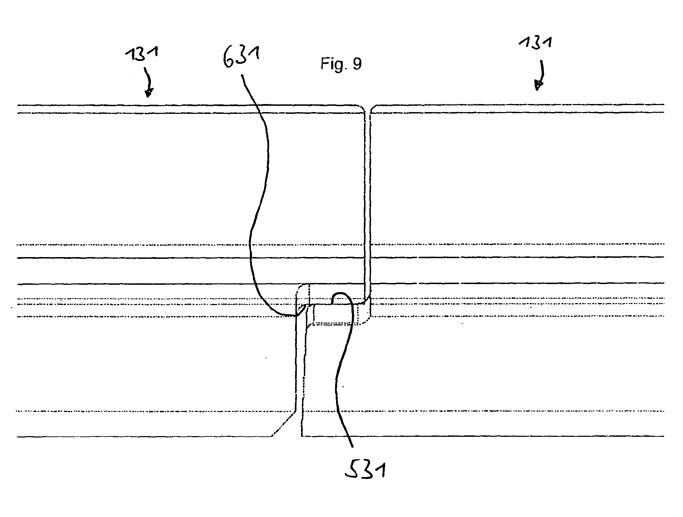

Die Figur 8 zeigt die Detailansicht von Figur 7 als Querschnitt, wobei die gleichen Bezugszeichen die gleichen Bauteile veranschaulichen. Gemäß einer besonders bevorzugten Ausführungsform der Erfindung weist die Laufgangplatte 132 die Ausnehmung 85 auf. Darin ist der Auflageklotz 86 eingesetzt. Auf diesem kann ein Seil einer Stallentmistungsanlage aufliegen. Die Größe des Kanals 70 ist so gestaltet, dass der Kanal ein Seil einer üblichen Stallentmistungsanlage, mit der ein Mistschieber der Stallentmistungsanlage auf dem Laufgang hin und her bewegt wird, unter Flur (im Stallboden) verlaufen kann. Durch die Auflageklötze 86 in dem Kanal der bevorzugten Ausführungsform der Erfindung kann vermieden werden, dass durch die Hin- und Herbewegung des Seils der Stallentmistungsanlage Furchen in den Laufgangboden durch Hin- und Herbewegung des Seils gekratzt werden, wodurch der Stallboden in seiner Struktur geschwächt und für Flüssigkeiten durchlässig werden kann. Die Klötze 86 können aus einem sehr abriebsfesten Material sein mit geringem Widerstand. Besonders bevorzugt sind sie aber aus einem Material, das auch das Seil nicht beschädigt, preiswert ist und das nach einiger Zeit ausgewechselt wird, wenn das Seil der Stallentmistungsanlage den Klotz durch die Hin- und Herbewegung verschlissen hat.

Die Figur 9 zeigt einen Schnitt durch den Laufgang der Fig. 7 und 8 durch den Kanal 70, wobei die gleichen Bezugszeichen die gleichen Bauteile veranschaulichen. Dabei ist eine weitere Laufgangplatte 131 gezeigt. Die hintereinander verlegten Laufgangplatten 131 und 131 weisen dabei an dem gemeinsamen Stoß ineinander greifende und teilweise überlappende Ausnehmungen und Vorsprünge auf. Die Laufgangplatte 131 weist den Vorsprung 531 auf (siehe auch Fig. 7), der von der Ausnehmung 631 der anderen Laufgangplatte 131 aufgenommen wird. Die Laufgangplatte 132 weist den Vorsprung 532 (siehe Fig. 7) auf, der von einer entsprechenden Ausnehmung einer anstoßenden weiteren Laufgangplatte 132 aufgenommen wird.

Die Ausführungsformen der Laufgangplatten gemäß der Figuren 7 bis 9 können ein Quellband aufweisen.

Die Figur 10 zeigt einen Ausschnitt von einer besonders vorteilhaften und bevorzugten Ausführungsform eines erfindungsgemäßen Stallbodens gemäß Fig. 1 mit Laufgangplatten und teilweise dargestellten Liegemuldenplatten in einer Perspektivansicht, wobei die gleichen Bezugszeichen die gleichen Bauteile veranschaulichen. Die nebeneinander verlegten und zusammenstoßenden Laufgangplatten 131 und 132 der zwei Reihen 31 und 32 von hintereinander verlegten, zusammenstoßenden Laufgangplatten sind jeweils mit einem Verbindungselement 90 verbunden. Durch die Verbindung der Laufgangplatten 131 und 132 der zwei Reihen 31 und 32 kann die Dichtigkeit des Laufgangs 30 zusätzlich verbessert werden.

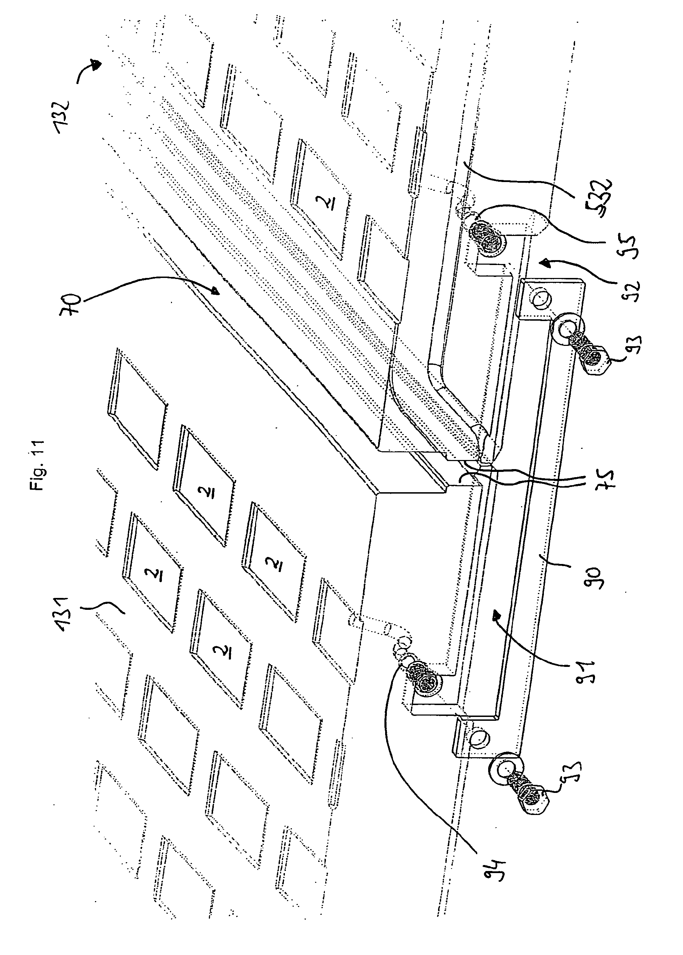

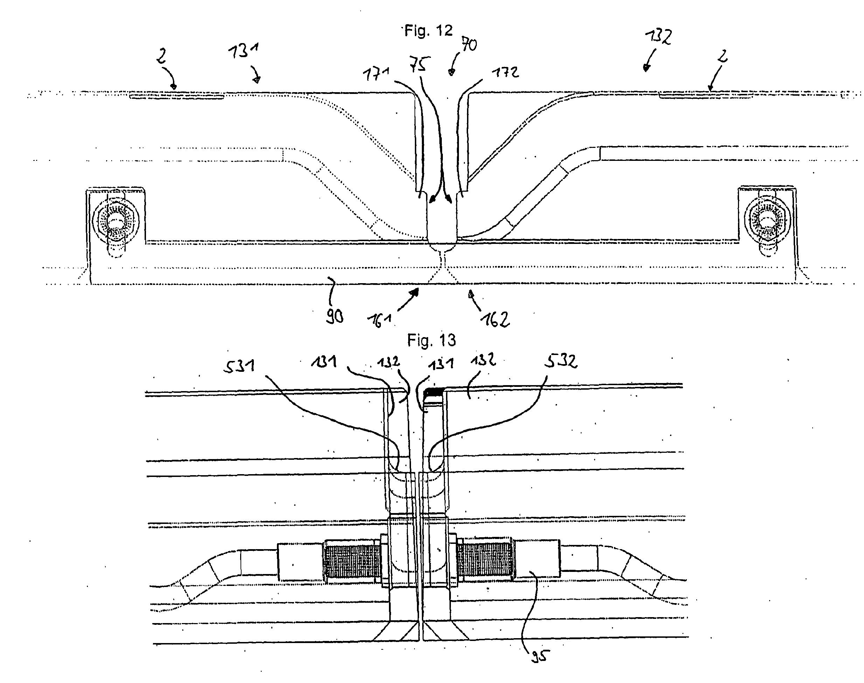

Die Figur 11 zeigt eine Detailansicht der Laufgangplatten 131 und 132 der Perspektivansicht von Figur 10 und ihre Verbindung durch das Verbindungselement 90. Das Verbindungselement 90 ist als Verbindungsanker ausgebildet. Zur Aufnahme des Verbindungsankers 90 weisen die Laufgangplatten 131 bzw. 132 die Ausnehmung 91 bzw. 92 zur Aufnahme des Verbindungselements 90 auf. Besonders bevorzugt, weisen diese Laufgangplatten zwei solcher Ausnehmungen 91 bzw. 92 zur Aufnahme des Verbindungselements auf, jeweils eine Ausnehmung an der Seite, an der die Laufgangplatte 131 mit einer weiteren Laufgangplatte 131 bzw. die Laufgangplatte 132 mit einer weiteren Laufgangplatte 132 zusammenstößt, auf. Diese zwei Ausnehmungen pro Laufgangplatte sind an den Seiten der Laufgangplatten angeordnet, an denen die Laufgangplatten mit einer Laufgangplatte ihrer Reihe zusammenstoßen. Damit wird die Zugänglichkeit der Ausnehmungen 91 und 92 gewährleistet, selbst wenn die Ausnehmungen an der der im Wesentlichen planen Fläche zugewandten Unterseite angeordnet sind. Dies ist bevorzugt, da somit kein weiteres Dichtigkeitsproblem geschaffen, sondern vermieden wird. Die Laufgangplatten 131 und 132 weisen an den Seiten, an denen sie zusammenstoßen, jeweils einen Vorsprung 161 bzw. 162 auf (siehe Fig. 12). Dadurch bilden sie den zur Laufgangoberfläche hin offenen Kanal 70. Die Vorsprünge 161 und 162 sind so ausgeführt, dass sie einen halbrohrförmig ausgeformten Boden des Kanals bilden. Nach dem Verlegen der Laufgangplatten und dem Verbinden der Laufgangplatten 131 und 132 mit dem Verbindungselement kann der Stoß zwischen den Platten 131 und 132 zusätzlich abgedichtet werden, indem eine Rundschnur (nicht gezeigt) in den halbrohrförmig ausgeformten Boden des Kanals 70 eingebracht wird. Der sich durch die Vorsprünge 171 und 172 der Laufgangplatten 131 bzw. 132 zum Boden des Kanal 70 hin verjüngende, vorzugsweise gestufte, Bereich 75 des Kanals kann nach dem Einbringen der Rundschnur mit einer Vergussmasse unter Ausbildung einer Zweiflankendichtung abgedichtet werden.

Nach dem gleichen Prinzip der Abdichtung mit Rundschnur und Vergussmasse können auch die hintereinander verlegten, zusammenstoßenden Laufgangplatten 131 der Reihe 31 bzw. die hintereinander verlegten, zusammenstoßenden Laufgangplatten 132 der Reihe 32 zusätzlich abgedichtet werden. Dazu weist die Laufgangplatte 132 den Vorsprung 532 auf. Wie in Fig. 12 veranschaulicht, die eine Draufsicht auf den Querschnitt der Laufgangplatten 131 und 132 von Fig. 11 zeigt, weist die Laufgangplatte 131 einen dem Vorsprung 532 entsprechenden Vorsprung 531 auf, der an der "Rückseite" der Laufgangplatte 131 angeordnet ist, wie aus Fig. 13 zu erkennen ist. Auf die Vorsprünge 532 und 532 können für eine bevorzugte Abdichtung Rundschnüre eingelegt werden. Nach dem Einbringen der Rundschnüre kann darauf eine Vergussmasse zur Ausbildung einer Zweiflankendichtung gegossen werden.

Durch Verwendung dieser erfindungsgemäßen Laufgangplatten kann eine einfache und schnelle sowie sichere und dichte Abdichtung eines Laufgangs gewährleistet werden. Ein solcher Laufgang hält auch einem Befahren der Laufgangplatten 131 und 132 mit einem Fahrzeug stand, ohne die Dichtigkeit zu beeinträchtigen. Besonders bevorzugt sind die Laufgangplatten 131 und 132 gleich groß, d.h. gleich breit, gleich lang, gleich dick, und daher auch gleich schwer.

Bei einer bevorzugten Ausführungsform weisen die miteinander verbindbaren Laufgangplatten 131 und 132 gemäß der Fig. 7 bis 9 bzw. gemäß der Fig. 11 bis 13 ein Gefälle auf, so dass die Dicke der Platten 131 und 132 zu den Seiten hin, an denen sie zusammenstoßen und den Kanal 70 bilden, abnimmt. Damit kann die Flüssigkeit vorteilhaft in den Kanal 70 laufen und bei einer bevorzugten Ausführungsform zum Teil auch über den Kanal 70 abgeleitet werden. Besonders bevorzugt sind die Laufgangplatten 131 und 132 zu dem Kanal 70, den sie zusammen bilden, wenn sie nach dem Verlegen zusammenstoßen, im Wesentlichen spiegelsymmetrisch aufgebaut. Im Wesentlichen spiegelsymmetrisch bedeutet, dass geringe Unterschiede durchaus bestehen können. Das Befestigungselement 90 wird vorzugsweise nur einmal zur Verbindung von zwei Laufgangplatten 131 und 132 verwendet. Ferner können die Ausnehmungen zur Aufnahme der Auflageklötze 86 auch nur in einer der Laufgangplatten 131 und 132 vorgesehen sein, wie in der Fig. 8 nur in der Platte 132. Außerdem ist es nicht notwendig, dass der Kanal 70 selbst einen spiegelsymmetrischen Querschnitt aufweist. Außerdem kann der Kanal auch schon vorgefertigt nur in einer der Laufgangplatten 131 oder 132 vorgesehen sein (nicht gezeigt). Ferner kann bei nur einer der Laufgangplatten 131 und 132 ein Quellband vorgesehen sein. Besonders bevorzugt sind die mindestens erste und zweite Betonplatte 20 und 120 jedoch soweit wie möglich spiegelsymmetrisch zu einer durch die Mitte des Kanals verlaufenden Spiegelebene des Laufgangs. Damit wird auch die Stabilität der Anordnung zum Befahren der Oberfläche erhöht. Außerdem ist die Verwendung eines Kanals 70 zur Führung eines Faltmistschiebers 80 (siehe Fig. 1) einer Stallentmistungsanlage geeignet. Insbesondere kann damit auch das Seil, mit dem der Schieber einer Stallentmistungsanlage bewegt wird, unter Flur aufgenommen werden, so dass dieses nicht auf dem Laufgang aufliegen muss und so ein Hindernis darstellt. Die hintereinander verlegten Platten 131 bzw. 132 können ebenfalls untereinander verbunden werden. Dies gilt entsprechend auch für die jeweils hintereinander verlegten, zusammenstoßenden Platten 141 und142 der Reihen 41 und 42 von Fig. 1.

Die in den Fig. 11 bis 13 gezeigten Laufgangplatten 131 und 132 sind gemäß einer bevorzugten Ausführungsform zueinander punktsymmetrisch. Die Laufgangplatte 132 kann durch eine Rotation von 180° um eine Flächennormale auf der Fläche, auf der die Laufgangplatten verlegt sind, in die Laufgangplatte 131 überführt werden. Somit können identische Laufgangplatten sowohl als Laufgangplatten 131 als auch als Laufgangplatten 132 verwendet werden. Dies erleichtert die Herstellung der Laufgangplatten, da nur eine Form verwendet werden muss, um die Laufgangplatten herzustellen. Außerdem können die Laufgangplatten leichter gelagert und transportiert werden. Beim Bau des Stalls müssen ferner keine zwei verschieden ausgeformten Laufgangplatten angeordnet und bevorratet werden, sondern es genügt ein einziger Vorrat an Laufgangplatten der gleichen Ausführung, um einen oder besonders bevorzugt sogar alle Laufgänge eines Stalls herzustellen. Die Herstellung des Stalls wird somit weiter vereinfacht und beschleunigt. Es reicht außerdem eine einzige an diese Laufgangplatten angepasste Halterung an einem Kran zur Verlegung der Laufgangplatten aus. Diese Halterung muss nicht für verschiedene Laufgangplatten gewechselt werden.

Durch die feste und sichere Verbindung der Laufgangplatten miteinander und durch die erfindungsgemäße Verbindung von Laufgangplatten mit Liegemuldenplatten bzw. mit dem Futtertisch 50 ist es auf besonders vorteilhafte Weise möglich, einen Stall ohne Fundament zu errichten. Denn durch die breite Auflage auf der Schotterschicht all dieser Bauteile weist der erfindungsgemäße Stall genügend Stabilität auf, um gegen die auf die Außenwand des Stalls angreifenden Windkräfte zu bestehen. Der erfindungsgemäße Stall ist daher nicht nur vorteilhaft schneller zu errichten, da die Laufgänge und andere Bodenteile aus bereits vorgefertigten erfindungsgemäßen Laufgangplatten aufgebaut werden, sondern vor allem auch dadurch, dass kein Fundament hergestellt werden muss. Erfindungsgemäß reicht es nämlich aus, dass eine Schotterschicht als Unterboden für den Stallboden auf dem Mutterboden verteilt und gegebenenfalls verdichtet wird. Auf dieser Schotterschicht, die einfach zu planieren ist und somit eine gemeinsame im Wesentlichen plane Fläche für die Laufgangplatten und Liegemulden des erfindungsgemäßen Betonfertigteilesystems, wie in Fig. 1 und 2 gezeigt, darstellt, kann das erfindungsgemäße Betonfertigteilesystem einfach und leicht zu einem Stallboden verlegt werden. Der einen solchen Stallboden umfassende erfindungsgemäße Stall ist sowohl hinsichtlich der einfacheren, schnelleren Bauweise, als auch durch die verbesserte Dichtigkeit und Stabilität verbessert. Durch die Verbindung der Laufgangplatten 131 und 132 miteinander und der Laufgangplatten mit den Liegemuldenplatten bzw. dem Futtertisch 330 ist ein solcher Stall auch ohne Fundament genügend stabil (siehe Fig. 1 und 2).

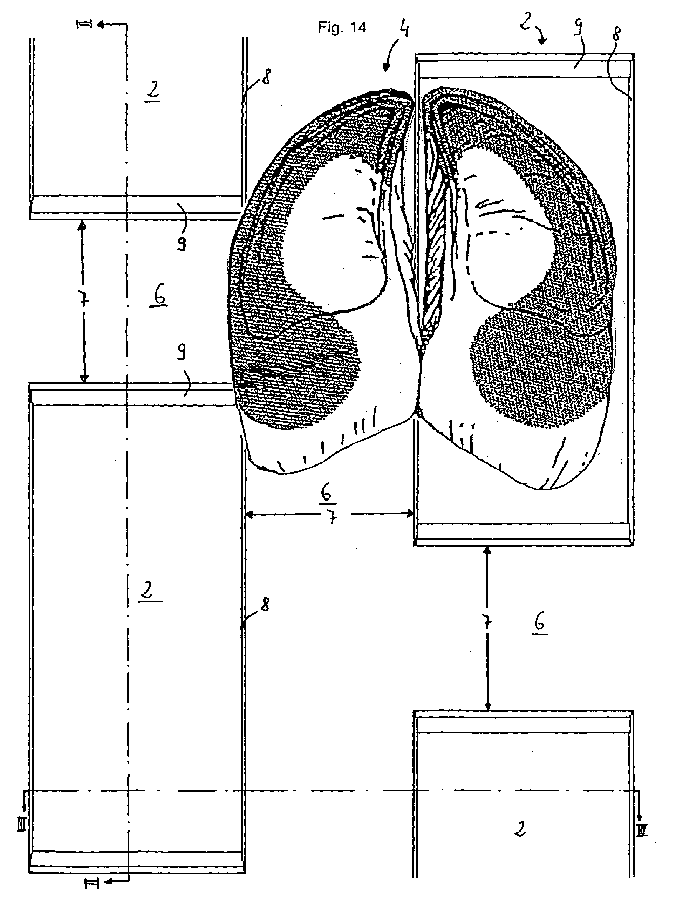

Die Figur 14 zeigt eine schematische Draufsicht auf eine erfindungsgemäße Betonplatte mit einer Projektion der Klauen eines Fußes 4 eines Rinds. Die Betonplatte ist insbesondere an die Nutzung für einen Stall mit Rindern angepasst. Ihre Oberfläche weist die Vertiefungen 2 auf. Die Vertiefungen haben eine Breite, die im Wesentlichen einer halben Fußbreite, d.h. im Wesentlichen einer Klauenbreite der gezeigten Projektion der Klauen des Fußes 4 in Laufrichtung des Rinds entspricht. Die Vertiefungen sind versetzt zueinander angeordnet. Ferner weisen die Vertiefungen 2 auf der Betonplatte solche Abstände voneinander auf, dass ein Rind im Wesentlichen bei jedem Schritt mit einer Klaue in eine Vertiefung treten kann. In der Ausführungsform der Betonplatte von Fig. 14 ist dies dadurch gewährleistet, dass die Vertiefungen durch die Stege 6 voneinander getrennt sind, die vorzugsweise die gleiche oder nur unwesentlich verschiedene, besonders bevorzugt eine nur unwesentlich geringere Breite aufweisen als die Vertiefungen 6. Mit Breite der Stege 6 ist der geringste Abstand zwischen zwei Vertiefungen 2 gemeint, wie durch die Pfeile 7 veranschaulicht. Die Abstände der Vertiefungen und damit die Breite 7 der Stege 6 hängt, wie die Breite der Vertiefungen 2 selbst, davon ab, für welche Tiere der Stallboden verwendet werden soll. In der Regel ist eine Breite 7 der Stege 6 von etwa 3 bis 9 cm, vorzugsweise 5 bis 7 cm, für die verschiedensten Rinder in verschiedenen Altersstufen geeignet. Die Vertiefungen 2 weisen eine Länge in den in dem Stall durch die Verlegung der Betonplatten vorgegebenen bevorzugten Laufrichtungen der Rinder auf, die vorteilhaft größer ist als die Klauenlänge der Rinder in diesen Laufrichtungen. Sie beträgt in der Fig. 14 etwa die 1,5-fache Länge der durch Schraffur gezeigten Auftrittsfläche 5 der Klaue 4 in Laufrichtung. Dadurch kann der halbe Fuß oder die Klaue 4 eines Rinds gut Platz finden in der Vertiefung 2. Die Länge der Vertiefungen sollte in den in dem Stall durch die Verlegung der Betonplatten vorgegebenen bevorzugten Laufrichtungen der Rinder jedoch in der Regel nicht viel länger sein als etwa die 2,5-fache Länge der durch Schraffur gezeigten Auftrittsfläche 5 der Klaue 4 in Laufrichtung, damit ein ausreichend großes Verhältnis von Vertiefungen 2 und Stegen 6 auf der Betonplatte bestehen bleibt, um ein seitliches Wegrutschen der Tiere in Laufrichtung im Wesentlichen zu vermeiden. Das Verhältnis der mit Vertiefungen 2 versehenen Fläche zur Gesamtfläche der Betonplatte ist bei einer bevorzugten Ausführungsform der Erfindung etwa 1: 2, wenn die Gesamtfläche der Betonplatte die Fläche einschließt, die mit Vertiefungen versehen ist. Das heißt die Fläche der Betonplatte, die Vertiefungen aufweist, verhält sich bei dieser bevorzugten Ausführungsform zu der Fläche der Betonplatte, die durch die zwischen den Vertiefungen verbleibenden Stege 6 beschrieben wird, etwa 1:1.

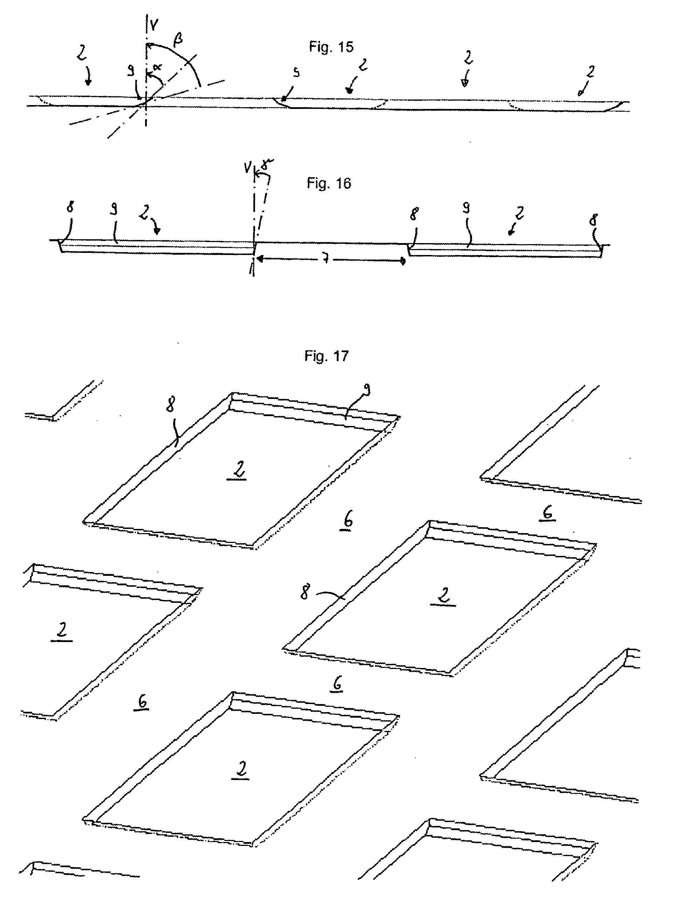

Wie in den Fig. 15 und 16 gezeigt, besitzen die Vertiefungen 2 abgeschrägte Seitenwände 8 und 9. Die Figur 15 zeigt einen Querschnitt durch die Betonplatte der Figur 14 gemäß der Linie II-II. Die Figur 16 zeigt einen Querschnitt durch die Betonplatte der Figur 14 gemäß der Linie III-III. Die Längsseitenwände 8 sind einfach abgeschrägt und weisen gegenüber der Vertikalen V eine Neigung γ von etwa 20° auf. Die Seitenwände in der Breitenerstreckung sind zweifach abgeschrägt und weisen gegenüber der Vertikalen V eine erste Neigung α von etwa 24° und eine zweite Neigung β von etwa 72° auf.

Die Fig. 17 zeigt die in den Fig. 14 bis 16 veranschaulichte Betonplatte mit den Vertiefungen 2, abgeschrägten Seitenwänden 8 und 9 und den zwischen den Vertiefungen bestehen bleibenden Stegen 6 in einer Perspektivansicht. Die in den Fig. 14 bis 17 gezeigten Vertiefungen 2 sind auch in den Fig. 1, 3, 5, 6, 7, 8, 10, 11 und 12 gezeigt.

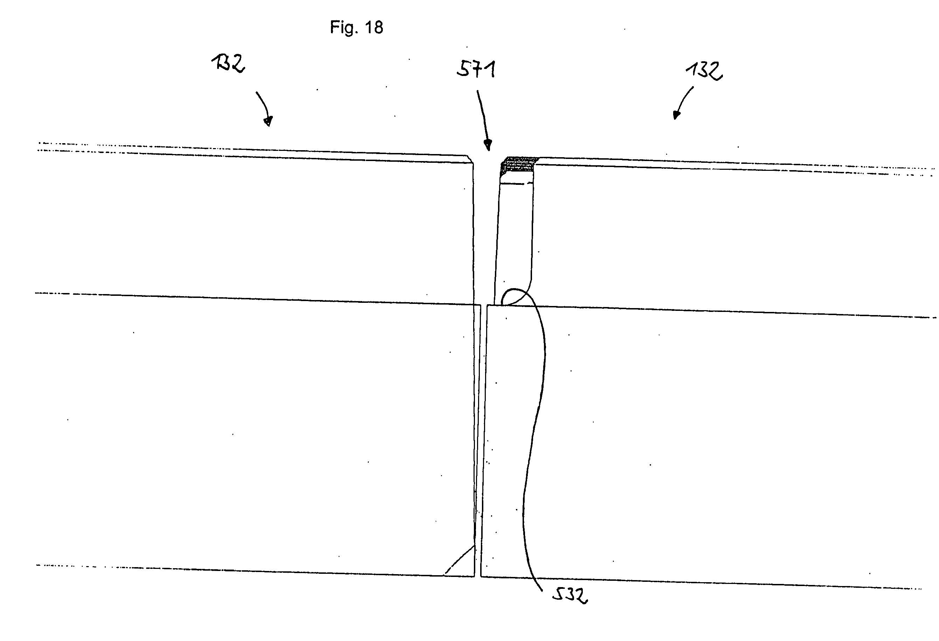

Die Figur 18 zeigt einen Querschnitt durch einen Laufgang von in einer Reihe hintereinander verlegten Laufgangplatten einer weiteren Ausführungsform der Erfindung. Während die Figur 13 eine Ausführungsform zeigt, bei der die hintereinander verlegbaren Laufgangplatten 131 bzw. 132 der Reihen 31 bzw. 32 miteinender verbindbar sind, zeigt die Ausführungsform der Figur 18, dass die hintereinander verlegten Laufgangplatten 132 nicht miteinander verbindbar sind. Der Zusammenhalt und die Dichtigkeit zwischen den Laufgangplatten 132 wird dadurch erreicht, dass jede der Laufgangplatten 132 mit einer Liegemuldenplatte 22 verbunden wird, wie in den Fig. 1 und 10 gezeigt. Eine zusätzliche Abdichtung kann über das Einlegen einer Rundschnur auf den Vorsprung 532 und ein nachfolgendes Vergießen des Spalts 571 mit Vergussmasse zur Ausbildung einer Zweiflankendichtung erfolgen.

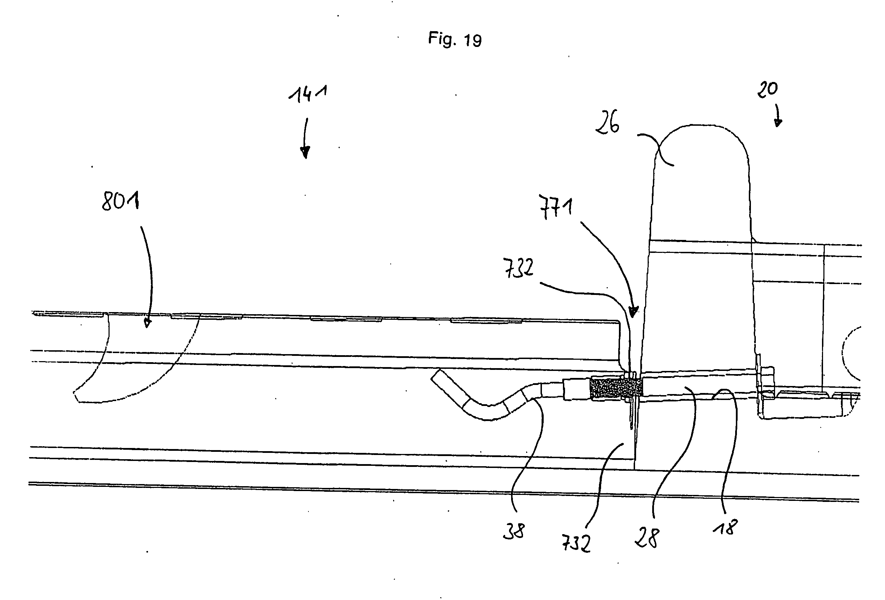

Die Figur 19 zeigt eine Detailansicht einer weiteren Ausführungsform des Querschnitts von Figur 4 nur aus der anderen Richtung des Laufgangs im Vergleich zur Figur 5. Bei der in Figur 19 gezeigten Ausführungsform der Erfindung stößt die Liegemuldenplatte 20 mit der Laufgangplatte 141 zusammen und ist mit ihr verbunden. Die Liegemuldenplatte 20 ist mit der Laufgangplatte 141 über die Schraube 28 verbunden. Die Schraube 28 kann bequem nach einem Verlegen der Liegemuldenplatten und Laufgangplatten eines Stalls durch den in die Liegemulde 11 hineinreichenden Durchgang 18 in die Verankerungshülse 38 geschraubt werden, die in der Laufgangplatte 141 vorgesehen ist. Anstelle der Schraube kann auch ein Verbindungsbolzen oder anderes Befestigungsmittel vorgesehen sein. Nach dem Verbinden kann der Durchgang 18 mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 141 ragende Rand 26 der Liegemuldenplatte 20 ist im Gegensatz zu der Ausführungsform der Fig. 5 nicht über die Laufgangplatte hinausgezogen. Für eine zusätzliche Abdichtung weist die Laufgangplatte 141 jedoch den Vorsprung 732 auf, mit dem die Laufgangplatte 141 gegen die Liegenmuldenplatte 20 stößt. Dadurch wird der Spalt 771 zwischen Laufgangplatte 141 und Liegenmuldenplatte 20 gebildet. Dieser Spalt kann für eine zusätzliche Abdichtung neben der festen Verbindung der Platten durch die Schraube 28 mit einer Rundschnur und Vergussmasse abgedichtet werden. Dazu wird zunächst eine Rundschnur nach dem Verlegen von Laufgangplatten und Liegemuldenplatten in den Spalt 771 eingelegt und danach mit Vergussmasse zur Ausbildung einer Zweiflankendichtung vergossen. Diese Ausführungsform hat den Vorteil, dass die Liegemuldenplatten und Laufgangplatten unabhängig voneinander ausgetauscht werden können. Damit wird eine Reparatur des Stallbodens eines Stalls besonders stark vereinfacht. Entsprechend kann besonders vorteilhaft auch die Laufgangplatte 142 in der Fig. 1 ausgeformt sein, die mit einem Futtertisch verbindbar sein kann, gemäß einer weiteren Ausführungsform der Erfindung aber auch nur durch eine solche Abdichtung gegen den Futtertisch abgedichtet sein kann. Dadurch können alle Laufgangplatten und Liegemuldenplatten unabhängig voneinander und unabhängig von dem Futtertisch besonders leicht und vorteilhaft ausgetauscht werden. In der Fig. 19 ist auch die gemäß einer besonders bevorzugten Ausführungsform vorgesehene Ausnehmung 801 zur Aufnahme eines Ankers einer Dreipunktaufhängung eines Krans gezeigt. Die Ausnehmung ist gebogen. Dadurch kann ein Anker einer Dreipunktaufhängung eines Krans zur Verlegung der Bodenplatte gut in die Ausnehmung 801 eingreifen, wobei ein Abbrechen und Abplatzen der Kanten der Ausnehmung zur Plattenoberfläche vermieden und weitere scharfe Kanten, die zu Verletzungen führen können vermieden. Besonders bevorzugt sind pro Platte drei solcher Vertiefungen 801 für drei Befestigungsanker einer Dreipunktaufhängung eines Krans vorgesehen. Solche Vertiefungen 801 können auch in den Liegemuldenplatten vorgesehen sein. Nach einem Verlegen können die Vertiefungen besonders bevorzugt mit einer Vergussmasse verschlossen werden.

Durch eine Abdichtung von zusammenstoßenden Platten, von denen mindestens eine einen Vorsprung (z.B. 732 in Fig. 19 bzw. 532 in Fig. 13) aufweist, der durch den Zusammenstoß mit der anderen Platte einen Spalt (771 in Fig. 19) bildet, mit einer Rundschnur (nicht gezeigt), die in den Spalt eingelegt wird, und durch darauffolgendes Vergießen mit Vergussmasse zur Ausbildung einer Zweiflankendichtung in dem Spalt, können alle unterhalb dieser Abdichtung vorgesehenen Befestigungsmittel (z.B. die Schraube 28 in Fig. 19 bzw. das Verbindungselement 90 und die Schrauben 93) besonders vorteilhaft vor korrodierenden Einflüssen durch Harn oder Kot geschützt werden. Dadurch kann vorteilhaft die Langlebigkeit eines erfindungsgemäßen Stalls erhöht werden. Besonders bevorzugt werden auch die Stöße von zusammenstoßenden Liegemuldenplatten durch eine entsprechende Abdichtung (siehe 777 in Fig. 10) an der Seite, an der die Liegemuldenplatten zu einem Laufgang ausgerichtet sind, abgedichtet. Damit kann keine Harn oder Kot umfassende Flüssigkeit die Verbindungselemente, die unterhalb der Abdichtungen angeordnet sind, erreichen. Wenn die Laufgangplatten durch eine wie oben beschriebene Abdichtung mit Rundschnur und Vergussmasse zur Ausbildung einer Zweiflankendichtung zusätzlich abgedichtet werden, ist es bevorzugt, dass Auflageklötze nach dieser Abdichtung in den Kanal 70 bzw. 71 auf die Abdichtung eingebracht werden. Besonders vorteilhaft werden sie in dem Kanal 70 bzw. 71 eingespreizt.

## Patentansprüche

1. Betonfertigteilesystem für einen Stallboden, umfassend:
(a) Laufgangplatten (131, 132, 141, 142) aus Beton für mindestens einen Laufgang (30) und
(b) Liegemuldenplatten (20, 21, 22, 43) aus Beton mit Liegemulden (11, 12) für Tiere,
wobei die Laufgangplatten und Liegemuldenplatten auf einer gemeinsamen im Wesentlichen planen Fläche verlegbar sind, und die Liegemuldenplatten mit den Laufgangplatten, mit denen sie nach einem Verlegen zusammenstoßen, verbindbar sind, wobei der mindestens eine Laufgang (30, 40) zwei zusammenstoßende, nebeneinander verlegbare Reihen von jeweils zusammenstoßenden, hintereinander verlegbaren Laufgangplatten umfasst,
wobei die Laufgangplatten derart ausgebildet sind, dass deren zwei Reihen einen Kanal (70, 71) bilden zur Aufnahme eines Seils einer Stallentmistungsanlage,
wobei die Laufgangplatten von jeder der zwei Reihen jeweils mindestens eine Ausnehmung zur Aufnahme eines Verbindungselements aufweisen.

2. Betonfertigteilesystem nach Anspruch 1, das weitere Laufgangplatten umfasst, die nach einem Verlegen mit einem Futtertisch verbindbar sind.

3. Betonfertigteilesystem nach Anspruch 1 oder 2, wobei jede Laufgangplatte von einer der zwei Reihen mit der Laufgangplatte der anderen Reihe, mit der sie nach einem Verlegen zusammenstößt, verbindbar ist.

4. Betonfertigteilesystem nach Anspruch 3, wobei jede Laufgangplatte der zwei Reihen nach einem Verlegen mit zwei Liegemuldenplatten oder dem Futtertisch verbindbar ist.

5. Betonfertigteilesystem nach einem der vorstehenden Ansprüche, wobei der mindestens eine Laufgang, nach einem Verlegen der Laufgangplatten und Liegemuldenplatten und einem Verbinden der Laufgangplatten mit den Liegemuldenplatten, mit denen sie zusammenstoßen, und gegebenenfalls nach einem Verbinden der weiteren Laufgangplatten mit dem Futtertisch, und vorzugsweise nach einem Verbinden der Laufgangplatten der zwei Reihen miteinander, mit einem Fahrzeug befahrbar und dabei so dicht ist, dass eine Flüssigkeit im Wesentlichen nicht durch den Laufgang in die im Wesentlichen plane Fläche sickert.

6. Betonfertigteilesystem nach einem der vorstehenden Ansprüche, wobei die Liegemuldenplatten mit Laufgangplatten von zwei Laufgängen verbindbar sind.

7. Betonfertigteilesystem nach einem der vorstehenden Ansprüche, wobei die Laufgangplatten an den Seiten, mit denen sie nach dem Verlegen untereinander zusammenstoßen, ineinandergreifende, vorzugsweise überlappende, besonders bevorzugt formschlüssige, Vorsprünge und/oder Ausnehmungen aufweisen.

8. Betonfertigteilesystem nach einem der vorstehenden Ansprüche, wobei die Laufgangplatten in dem Kanal eine oder mehrere Ausnehmung(en) zur Aufnahme von einem Auflageklotz oder mehr Auflageklötzen für das Seil aufweisen.

9. Betonfertigteilesystem nach einem der vorstehenden Ansprüche, wobei die Laufgangplatten ein Quellband aufweisen, vorzugsweise an jeder Seite, an der die Laufgangplatten mit einer anderen Laufgangplatte nach dem Verlegen zusammenstoßen.

10. Betonfertigteilesystem nach einem der vorstehenden Ansprüche, wobei die Liegemuldenplatten an den Seiten, an denen sie mit Laufgangplatten zusammenstoßen, einen in die Mulden der Liegemuldenplatten hineinreichenden Durchgang aufweisen, durch den sie mit einem Befestigungsmittel, vorzugsweise einer Schraube, mit den Laufgangplatten verbindbar sind.

11. Betonfertigteilesystem nach einem der vorstehenden Ansprüche, wobei die Liegemuldenplatten an den Seiten, an denen sie mit Laufgangplatten zusammenstoßen, einen über die Laufgangplatten hinausragenden Rand besitzen.

12. Betonfertigteilesystem nach einem der vorstehenden Ansprüche, wobei die Liegemuldenplatten an den Seiten, an denen sie mit Laufgangplatten zusammenstoßen, eine gegenüber der Flächennormalen zu der im Wesentlichen planen Fläche eine Neigung aufweisen.

13. Betonfertigteilesystem nach einem der vorstehenden Ansprüche, wobei die Oberflächen der Laufgangplatten Vertiefungen aufweisen, wobei die Vertiefungen vorzugsweise eine Breite aufweisen, die im Wesentlichen einer Klauenbreite in der Laufrichtung eines, vorzugsweise ausgewachsenen, Rinds entspricht.

14. Stallboden, umfassend Laufgangplatten für mindestens einen Laufgang und Liegemuldenplatten von einem Betonfertigteilesystem nach einem der Ansprüche 1 bis 13, die auf einer gemeinsamen im Wesentlichen planen Fläche verlegt sind, wobei die Liegemuldenplatten mit den Laufgangplatten, mit denen sie zusammenstoßen, verbunden sind.

15. Stallboden nach Anspruch 14, der für jeweils zwei zusammenstoßende, nebeneinander verlegte Laufgangplatten mindestens ein Verbindungselement aufweist, das diese Laufgangplatten verbindet.

16. Stallboden nach Anspruch 14 oder 15, wobei jede Laufgangplatte von einer der zwei Reihen mit zwei Liegemuldenplatten oder dem Futtertisch verbunden ist.

17. Stallboden, nach einem der Ansprüche 14 bis 16, wobei der Laufgang mit einem Fahrzeug befahrbar und dabei so dicht ist, dass eine Flüssigkeit im Wesentlichen nicht durch den Laufgang sickert.

18. Stall, umfassend einen Stallboden nach einem der Ansprüche 14 bis 17.

19. Verfahren zur Herstellung eines Stalls, umfassend die folgenden Schritte:
(A) ein Bereitstellen einer im Wesentlichen planen Fläche, vorzugsweise aus Schotter oder Kies,
(B) ein Verlegen von Laufgangplatten und Liegemuldenplatten aus Beton von einem Betonfertigteilesystem nach einem der Ansprüche 1 bis 13 auf der im Wesentlichen planen Fläche,
(C) ein Verbinden der Liegemuldenplatten mit den Laufgangplatten, mit denen sie zusammenstoßen, zur Ausbildung eines Stallbodens,
(D) gegebenenfalls ein Verbinden von Laufgangplatten mit einem Futtertisch und
(E) Verbinden von zusammenstoßenden, nebeneinander verlegten Reihen von jeweils zusammenstoßenden, hintereinander verlegten Laufgangplatten, die mindestens einen Laufgang bilden.

## Claims

1. Prefabricated concrete element system for a stable floor, comprising:
(a) gangway plates (131, 132, 141, 142) made of concrete for at least one gangway (30), and
(b) cubicle plates (20, 21, 22, 43) made of concrete for cubicles (11, 12) for animals,
wherein the gangway plates and cubicle plates can be laid on a common substantially planar surface, and the cubicle plates can be connected to the gangway plates, with which they abut after being laid, wherein the at least one gangway (30, 40) comprises two abutting, parallelly layable rows of abutting, successively layable gangway plates, wherein the gangway plates are formed such that their two rows form a channel (70, 71) for accommodating a rope of a manure removal system, wherein the gangway plates of each of the two rows comprise at least one recess for accommodating a connection element.

2. Prefabricated concrete element system as claimed in claim 1, which comprises further gangway plates which after laying can be connected to a fodder table.

3. Prefabricated concrete element system as claimed in claim 1 or 2, wherein each gangway plate among one of the two rows can be connected to the gangway plate of the other row with which it abuts after laying.

4. Prefabricated concrete element system as claimed in claim 3, wherein each gangway plate of the two rows can be connected to two cubicle plates or the fodder table after laying.

5. Prefabricated concrete element system as claimed in one of the preceding claims, wherein after laying the gangway plates and cubicle plates, and a connection of the gangway plates with the cubicle plates, with which they abut, and possibly after connection of the further gangway plates with the fodder table, and preferably after connection the gangway plates of the two rows with one another, the at least one gangway is drivable by a vehicle and is so tight that a liquid does substantially not percolate through the gangway into the substantially planar surface.

6. Prefabricated concrete element system as claimed in one of the preceding claims, wherein the cubicle plates can be connected to gangway plates of two gangways.

7. Prefabricated concrete element system as claimed in one of the preceding claims, wherein the gangway plates comprise interlocking, preferably overlapping, especially preferably positively locking projections and/or recesses on the sides at which the abut to one another after laying.

8. Prefabricated concrete element system as claimed in one of the preceding claims, wherein the gangway plates comprise in the channel one or several recess(es) for accommodating a support block or several support blocks for the rope.

9. Prefabricated concrete element system as claimed in one of the preceding claims, wherein the gangway plates have a swelling band, preferably at each side at which the gangway plates abut with another gangway plate after laying.

10. Prefabricated concrete element system as claimed in one of the preceding claims, wherein the cubicle plates at the sides at which they abut with the gangway plates comprise a passage reaching into the cubicles of the cubicle plates, through which they can be connected to the gangway plates by means of an attachment means, preferably a screw.

11. Prefabricated concrete element system as claimed in one of the preceding claims, wherein the cubicle plates have an edge extending beyond the gangway plates at the sides at which they abut with the gangway plates.

12. Prefabricated concrete element system as claimed in one of the preceding claims, wherein the cubicle plates have an inclination with respect to the substantially planar surface compared to the surface normal at the sides at which they abut with the gangway plates.

13. Prefabricated concrete element system as claimed in one of the preceding claims, wherein the surfaces of the gangway plates comprise recesses, wherein the recesses preferably have a width, which substantially corresponds to a claw width in the walking direction of a preferably full-grown cow.

14. Stable floor, comprising gangway plates for at least one gangway and cubicle plates of a prefabricated concrete element system as claimed in one of claims 1 to 13, which are laid on a common substantially planar surface, wherein the cubicle plates are connected to the gangway plates with which they abut.

15. Stable floor as claimed in claim 14, which comprises at least one connection element for two abutting, parallelly laid gangway plates, said connection element connecting these gangway plates.

16. Stable floor as claimed in claim 14 or 15, wherein each gangway plate of one of the two rows is connected to two cubicle plates or to the fodder table.

17. Stable floor as claimed in one of claims 14 to 16, wherein the gangway is drivable by a vehicle and is so tight that a liquid does substantially not percolate through the gangway.

18. Stable, comprising a stable floor as claimed in one of claims 14 to 17.

19. Method of building a stable, comprising the following steps:
(A) providing a substantially planar surface, preferably of ballast or gravel,
(B) laying gangway plates and cubicle plates of concrete of a prefabricated concrete element system as claimed in one of claims 1 to 13 on the substantially planar surface,
(C) connecting the cubicle plates with the gangway plates with which they abut for forming the stable floor,
(D) possibly connecting gangway plates with a fodder table, and
(E) connecting abutting, parallelly laid rows of abutting, successively laid gangway plates, which form at least one gangway.

## Revendications

1. Système d'éléments préfabriqués en béton pour un sol d'étable, comprenant :
(a) panneaux de couloir de service (131, 132, 141, 142) en béton pour au moins un couloir de service (30) et
(b) panneaux de litière (20, 21, 22, 43) en béton avec des litières (11, 12) pour animaux,
dans lequel les panneaux de couloir de service et les panneaux de litière peuvent être posés sur une surface commune essentiellement plane, et les panneaux de litière peuvent être raccordés avec les panneaux de couloir de service, auxquels ils s'accrochent après une pose, dans lequel le au moins un couloir de service (30, 40) comporte deux rangées, pouvant être posées l'une à côté de l'autre en s'accrochant, de panneaux de couloir de service respectifs pouvant être posés l'un derrière l'autre en s'accrochant, dans lequel les panneaux de couloir de service sont formés de sorte que leurs deux rangées forment un canal (70, 71) pour la réception d'un câble d'une installation d'évacuation de fumier d'étable, dans lequel les panneaux de couloir de service de chacune des deux rangées présentent respectivement au moins un évidement pour la réception d'un élément de liaison.

2. Système d'éléments préfabriqués en béton selon la revendication 1, comportant d'autres panneaux de couloir de service pouvant être reliés avec une mangeoire à fourrage après une pose.

3. Système d'éléments préfabriqués en béton selon la revendication 1 ou 2, dans lequel chaque panneau de couloir de service d'une des deux rangées peut être relié avec les panneaux de couloir de service de l'autre rangée auxquels ils s'accrochent après une pose.

4. Système d'éléments préfabriqués en béton selon la revendication 3, dans lequel chaque panneau de couloir de service des deux rangées peut être relié avec deux panneaux de litière ou la mangeoire à fourrage après une pose.

5. Système d'éléments préfabriqués en béton selon l'une quelconque des revendications précédentes, dans lequel le au moins un couloir de service, après une pose des panneaux de couloir de service et des panneaux de litière et un raccordement des panneaux de couloir de service avec les panneaux de litière auxquels ils s'accrochent, et le cas échéant après un raccordement des autres panneaux de couloir de service avec la mangeoire à fourrage, et de manière préférée après un raccordement des panneaux de couloir de service de la deuxième rangée les uns avec les autres, peut être parcouru par un véhicule et est en outre étanche, de sorte qu'un liquide ne s'infiltre principalement pas à travers le couloir de service dans la surface principalement plane.

6. Système d'éléments préfabriqués en béton selon l'une quelconque des revendications précédentes, dans lequel les panneaux de litière peuvent être raccordés avec des panneaux de couloir de service de deux couloirs de service.

7. Système d'éléments préfabriqués en béton selon l'une quelconque des revendications précédentes, dans lequel les panneaux de couloir de service présentent, sur les côtés par lesquels ils s'accrochent réciproquement après une pose, des saillies et/ou des évidements s'engrenant, de manière préférée s'imbriquant, de manière particulièrement préférée à crabot.

8. Système d'éléments préfabriqués en béton selon l'une quelconque des revendications précédentes, dans lequel les panneaux de couloir de service présentent dans le canal un ou plusieurs évidements afin de recevoir une cale de support ou plusieurs cales de support pour le câble.

9. Système d'éléments préfabriqués en béton selon l'une quelconque des revendications précédentes, dans lequel les panneaux de couloir de service présentent un cordon expansif, de manière préférée sur chaque côté par lequel les panneaux de couloir de service s'accrochent à un autre panneau de couloir de service après la pose.

10. Système d'éléments préfabriqués en béton selon l'une quelconque des revendications précédentes, dans lequel les panneaux de litière présentent, sur les faces par lesquelles ils s'accrochent avec des panneaux de couloir de service, un passage aboutissant dans les litières des panneaux de litière, grâce auxquels ils peuvent être raccordés aux panneaux de couloir de service avec un moyen de fixation, de manière préférée une vis.

11. Système d'éléments préfabriqués en béton selon l'une quelconque des revendications précédentes, dans lequel les panneaux de litière possèdent un bord saillant sur les panneaux de couloir de service sur les côtés par lesquels ils s'accrochent avec des panneaux de couloir de service.

12. Système d'éléments préfabriqués en béton selon l'une quelconque des revendications précédentes, dans lequel les panneaux de litière présentent, sur les côtés par lesquels ils s'accrochent avec des panneaux de couloir de service, une inclinaison par rapport aux normales des surfaces de la surface principalement plane.

13. Système d'éléments préfabriqués en béton selon l'une quelconque des revendications précédentes, dans lequel les surfaces des panneaux de couloir de service présentent des renfoncements, les renfoncements présentant de manière préférée une largeur correspondant principalement à une largeur de sabot dans le sens de la marche d'un bovin, de manière préférée adulte.

14. Sol d'étable, comprenant des panneaux de couloir de service pour au moins un couloir de service et des panneaux de litière d'un système d'éléments préfabriqués en béton selon l'une quelconque des revendications 1 à 13, posés sur une surface commune principalement plane, les panneaux de litière étant raccordés aux panneaux de couloir de service auxquels ils s'accrochent.

15. Sol d'étable selon la revendication 14, qui, pour respectivement deux panneaux de couloir de service posés l'un à côté de l'autre en s'accrochant, présente au moins un élément de raccordement raccordant ces panneaux de couloir de service.

16. Sol d'étable selon la revendication 14 ou 15, dans lequel chaque panneau de couloir de service de l'une des deux rangées est raccordé avec deux panneaux de litière ou la mangeoire à fourrage.

17. Sol d'étable selon l'une quelconque des revendications 14 à 16, dans lequel le couloir de service peut être parcouru par un véhicule et est en outre étanche de sorte qu'un liquide ne s'infiltre principalement pas à travers le couloir de service.

18. Etable, comportant un sol d'étable selon l'une quelconque des revendications 14 à 17.

19. Procédé de fabrication d'une étable, comportant les étapes suivantes :
(A) une préparation d'une surface principalement plane, de manière préférée en pierres concassées ou en gravier,
(B) une pose de panneaux de couloir de service et de panneaux de litière en béton d'un système d'éléments préfabriqués en béton selon l'une quelconque des revendications 1 à 13 sur la surface principalement plane,
(C) un raccordement des panneaux de litière avec les panneaux de couloir de service, auxquels ils s'accrochent, afin de former un sol d'étable,
(D) éventuellement un raccordement de panneaux de couloir de service avec une mangeoire à fourrage et
(E) un raccordement de rangées, posées les unes à côté des autres, s'accrochant, de panneaux de couloir de service posés les uns derrière les autres, chacun s'accrochant, pour former au moins un couloir de service.
